# EUROPEAN PATENT APPLICATION

(11) **EP 4 679 141 A1**
(43) Date of publication of application: **14.01.2026**
(21) Application number: 24771086.6
(22) Date of filing: 28.02.2024
(51) Int. Cl.: G01T 7/00, G01T 1/16

(54) **BENDABLE RADIATION DETECTOR COMPRISING WHEELS**

(30) Priority: 10.03.2023 KR 20230031539
(71) Applicant: DRTECH CORP, Seongnam-Si, Gyeonggi-do 13216 (KR)
(72) Inventor: MOON, Beom Jin, Suwon-si Gyeonggi-do 16707 (KR); KIM, Hyeong Sik, Hwaseong-si Gyeonggi-do 18489 (KR); SHIM, Hyun Sup, Hwaseong-si Gyeonggi-do 18436 (KR); GIL, Yong Cheol, Suwon-si Gyeonggi-do 16571 (KR)
(74) Representative: Jung, Minkyu
(86) International application number: PCT/KR2024/002596
(87) International publication number: WO 2024/191086

(57) **Abstract**

The present disclosure relates to a radiation detector for detecting radiation, and the radiation detector includes a flexible radiation detection panel that extends in a first direction, and detects radiation incident on a first surface thereof, a bending support unit that is in contact with a second surface opposite to the first surface of the radiation detection panel, supports the radiation detection panel, and adjusts bending of the radiation detection panel around a bending axis parallel to a second direction intersecting the first direction, and a plurality of rotatable detector wheel assemblies that are positioned on at least one of an upper side and a lower side of the bending support unit, allow the radiation detector to maintain a predetermined distance from a subject, and allow the radiation detector to move along an outer circumferential surface of the subject.

## Description

### [Technical Field]

The present invention discloses a bendable radiation detector including a front protection unit. More particularly, the present invention discloses a bendable radiation detector including a detachable front protection unit to increase the durability of the bendable radiation detector. The present invention also discloses a bendable radiation detector including wheels. More specifically, the bendable radiation detector includes the wheels and thus may obtain a radiographic image while rotating around a subject.

### [Background Art]

When using a radiation detector, protection of the detector is required depending on a user and a usage site. This is because the surface of the radiation detector directly affects a radiographic image obtained by the detector. Accordingly, various approaches have been proposed to protect a front surface of the radiation detector, but due to the difficulty in attachment and detachment, the detector itself must be replaced in some cases when the surface of the detector is scratched. In addition, although a case has been used to protect the detector, the detector covered by the case was bulky, which made it difficult to use, and there was a problem that the detector had to be separated from the case when being placed in a storage box or charged. Further, in some cases, the distance between the subject and the detector was too far by the case, thereby degrading the quality of the radiographic image. In particular, in order to apply the case to a bendable radiation detector, there is a problem that manufacturing is difficult because the case itself must also be bendable.

Further, there have been cases in which a radiation detector captures an image of a subject while rotating around the subject. As a radiation detector becomes larger, not only does it become difficult to rotate the radiation detector around a subject, but a distance between the detector and the subject may also vary while the radiation detector is being moved. Accordingly, approaches for moving the radiation detector while maintaining a constant distance from the subject are being studied. For example, there have been cases in which an arm was provided on the detector, but the arm itself was heavy and fixed, making it difficult to implement a portable detector. In addition, there have been cases in which the arm was unsuitable for moving the bendable detector along a round surface of a subject.

### Related Art Documents

1. Korean Patent Application No. 10-2012-0119945
2. Korean Patent Application No. 10-2014-0103875

### [Disclosure]

### [Technical Problem]

The present disclosure relates to a front protection unit that protects a surface of a portable bendable radiation detector. Further, the present disclosure relates to a portable bendable radiation detector that is movable while maintaining a constant distance from a subject having a round surface.

However, the technical problems are not limited to the above-described technical problems, and other technical problems may also exist.

### [Technical Solution]

A radiation detector for detecting radiation according to the present disclosure includes a flexible radiation detection panel that extends in a first direction and detects radiation incident on a first surface thereof, a bending support unit that is in contact with a second surface opposite to the first surface of the radiation detection panel, supports the radiation detection panel, and adjusts bending of the radiation detection panel around a bending axis parallel to a second direction intersecting the first direction, and a front protection unit that is positioned in a third direction of the radiation detection panel to protect the radiation detection panel, has a larger area than the exposed radiation detection panel so as to cover the radiation detection panel, is at least partially fixed to the bending support unit, is integrally formed, has flexibility, and is attachable to and detachable from the radiation detection panel.

The front protection unit of the radiation detector of the present disclosure may be formed of a thin plate material having radiation transmittance and resilience, and a thickness of the front protection unit may be greater than or equal to 0.1 T and less than or equal to 1 T.

An upper fixing part may be formed to protrude upward from an upper side of the front protection unit of the radiation detector of the present disclosure, a lower fixing part may be formed to protrude downward from a lower side of the front protection unit, the upper fixing part and the lower fixing part may be screw-coupled to the bending support unit, and holes formed in the upper fixing part and the lower fixing part may be circular holes, rather than laterally elongated holes.

The radiation detector of the radiation detector of the present disclosure may include a fixing bracket that is at least partially positioned in the third direction of at least one of the bending support unit and the front protection unit, covers at least a portion of one side of the front protection unit, and is fixed to the bending support unit, wherein the fixing bracket may include a protective cover covering at least a portion of one side of the front protection unit, a fixing-bracket frame coupled to the protective cover in the first direction, and in surface contact with the bending support unit to prevent shaking of the fixing bracket with respect to the bending support unit, and a fixing-bracket fixing part coupled to the fixing-bracket frame in the second direction, having a surface perpendicular to the fixing-bracket frame, and coupled to at least one of a lower surface and an upper surface of the bending support unit.

One side surface of the protective cover of the radiation detector of the present disclosure may be formed to be concave in the third direction with respect to one side surface of the fixing-bracket frame, and a height between the one side surface of the protective cover and the one side surface of the fixing-bracket frame may be greater than or equal to a thickness of the front protection unit.

When the bending support unit of the radiation detector of the present disclosure is unfolded, a space may be formed between an end of one side of the front protection unit and the fixing-bracket frame in the first direction, and as the bending support unit is bent, the space between the end of one side of the front protection unit and the fixing-bracket frame in the first direction may be reduced.

At least one left fixing part may be formed to protrude leftward from a left side of the front protection unit of the radiation detector of the present disclosure, at least one right fixing part may be formed to protrude rightward from a right side of the front protection unit, the right fixing part and the left fixing part may be screw-coupled to the bending support unit, and the left fixing part and the right fixing part may have laterally elongated holes.

The radiation detector of the present disclosure may include a fixing bracket that is at least partially positioned in the third direction of at least one of the bending support unit and the front protection unit, covers at least a portion of one side of the front protection unit, and is fixed to the bending support unit, wherein the fixing bracket may extend in the first direction and include an upper fixing bracket and a lower fixing bracket, the upper fixing bracket may include an upper detachment prevention unit that protrudes downward to prevent detachment of the front protection unit, and the lower fixing bracket may include a lower detachment prevention unit that protrudes upward to prevent detachment of the front protection unit.

At least a portion of four sides of the front protection unit of the radiation detector of the present disclosure may include a magnetic coupling unit including a magnet or a metal material having magnetism, and the magnetic coupling unit of the front protection unit may be coupled to a magnet or a metal material having magnetism of the bending support unit, so that the front protection unit is coupled to the bending support unit.

The radiation detector of the present disclosure may include a magnetic coupling unit that includes a magnet or a metal material having magnetism, is formed along four sides of the front protection unit, has a shape with a hole at a center, is positioned in the third direction of the front protection unit, and couples the front protection unit to the bending support unit by being coupled to a magnet or a metal material having magnetism of the bending support unit.

The front protection unit of the radiation detector of the present disclosure may include a front-protection-unit connection part positioned on at least one of an upper-left side, an upper-right side, a lower-left side, and a lower-right side, and a front-protection-unit fixing part coupled to the front-protection-unit connection part, coupling the front protection unit to the bending support unit, and having a surface perpendicular to the front protection unit, and at least one elongated hole extending laterally may be formed in the front-protection-unit fixing part.

A radiation detector for detecting radiation according to the present disclosure includes a flexible radiation detection panel extends in a first direction and detects radiation incident on a first surface thereof, a bending support unit that is in contact with a second surface opposite to the first surface of the radiation detection panel, supports the radiation detection panel, and adjusts bending of the radiation detection panel around a bending axis parallel to a second direction intersecting the first direction, and a plurality of rotatable detector wheel assemblies that are positioned on at least one of an upper side and a lower side of the bending support unit, allow the radiation detector to maintain a predetermined distance from a subject, and allow the radiation detector to move along an outer circumferential surface of the subject.

Each of the detector wheel assemblies of the radiation detector of the present disclosure may include a detector wheel that protrudes by 5 mm or less in a third direction perpendicular to the first direction and the second direction compared to the detection panel, and has a diameter of 30 mm or less, and a wheel rotation shaft that is parallel to the second direction, is a rotation center of the detector wheel, and is coupled to the bending support unit.

The wheel rotation shaft of the radiation detector of the present disclosure may have a shape that increases in diameter toward the second direction, the detector wheel may have a donut shape, and may be movable in the second direction and a direction opposite to the second direction with respect to the wheel rotation shaft, when the detector wheel moves in the second direction with respect to the wheel rotation shaft and is positioned at a large-diameter portion of the wheel rotation shaft, a rotation of the detector wheel may be restricted by a frictional force between an inner circumferential surface of the detector wheel and an outer circumferential surface of the wheel rotation shaft, and when the detector wheel moves in the direction opposite to the second direction with respect to the wheel rotation shaft and is positioned at a small-diameter portion of the wheel rotation shaft, the detector wheel may be rotatable.

The detector wheel of the radiation detector of the present disclosure may include a first wheel, a second wheel that is positioned in the second direction with respect to the first wheel, is parallel to the first wheel, and has the same diameter as the first wheel, and a plurality of shafts that couple one side of the first wheel and the other side of the second wheel and extend in a direction parallel to the wheel rotation shaft.

The radiation detector of the present disclosure may include a connection band surrounding the subject together with the bending support unit and fixing the radiation detector to the subject, wherein the connection band may include a plurality of fixing hooks hooked to the shafts included in different detector wheel assemblies, and a fixing band formed of an elastic material and coupling the plurality of fixing hooks.

The detector wheel of the radiation detector of the present disclosure may include a rotation hole used for rotation of the detector wheel around the wheel rotation shaft, a fixing hole used for fixing the detector wheel to the wheel rotation shaft, and a connection hole that is a passage through which the wheel rotation shaft is movable between the rotation hole and the fixing hole, and has a width smaller than a diameter of each of the rotation hole and the fixing hole.

The wheel rotation shaft of the radiation detector of the present disclosure may have a shape that increases in diameter toward the second direction, an inner circumferential surface of the detector wheel corresponding to the rotation hole may be formed of a material for reducing friction with the wheel rotation shaft, an inner circumferential surface of the detector wheel corresponding to the fixing hole may be formed of a material for increasing the friction with the wheel rotation shaft, when the detector wheel moves in the second direction with respect to the wheel rotation shaft and is positioned at a large-diameter portion of the wheel rotation shaft, the wheel rotation shaft may not be allowed to pass through the connection hole of the detector wheel, when the detector wheel moves in the direction opposite to the second direction with respect to the wheel rotation shaft and is positioned at a small-diameter portion of the wheel rotation shaft, the wheel rotation shaft may be allowed to pass through the connection hole of the detector wheel, a center of the rotation hole may be positioned at a center of the detector wheel, and the fixing hole may be eccentrically positioned with respect to the detector wheel.

Each of the detector wheel assemblies of the radiation detector of the present disclosure may include an accommodation part that is disposed on a surface of the bending support unit in the third direction and protrudes by 5 mm or less in the third direction from the surface of the bending support unit in the third direction, wherein the accommodation parts of the detector wheel assemblies are arranged side by side in the first direction, and spherical bearing ball inserted into the accommodation part to allow the radiation detector to move along the outer circumferential surface of the subject.

Further, a program for implementing an operation method of the radiation detector of the present disclosure may be recorded on a computer-readable recording medium.

### [Advantageous Effects]

A radiation detector according to the present disclosure includes a front protection unit so that a front surface of the radiation detector, which is bendable, can be protected without affecting the radiographic image. In addition, since the front protection unit does not affect the volume of the radiation detector, a user can easily carry the radiation detector provided with the front protection unit. In addition, the radiation detector provided with the front protection unit can be freely bent according to the shape of a subject.

Further, a radiation detector of the present disclosure includes a detector wheel assembly, and is capable of moving around a subject while maintaining a constant distance from the subject. In addition, the radiation detector provided with the detector wheel assembly according to the present disclosure is highly portable and bendable.

However, the effects of the radiation detector of the present disclosure are not limited to the effects described above.

### [Description of Drawings]

FIG. 1 is a front view illustrating a radiation detector according to one embodiment of the present disclosure.
FIG. 2 is a front view illustrating the radiation detector according to one embodiment of the present disclosure.
FIG. 3 is a view for describing a fixing bracket according to one embodiment of the present disclosure.
FIG. 4 is a view for describing the fixing bracket according to one embodiment of the present disclosure.
FIG. 5 is a view for describing a front protection unit according to one embodiment of the present disclosure.
FIG. 6 is a view for describing a front protection unit according to one embodiment of the present disclosure.
FIG. 7 is a view for describing a front protection unit according to one embodiment of the present disclosure.
FIG. 8 is a view for describing a front protection unit according to one embodiment of the present disclosure.
FIG. 9 is a view for describing a coupling between a bending support unit and the front protection unit according to one embodiment of the present disclosure.
FIG. 10 is a view for describing an additional example of the front protection unit according to one embodiment of the present disclosure.
FIG. 11 is a view for describing screw coupling according to one embodiment of the present disclosure.
FIG. 12 is a view for describing a front protection unit according to one embodiment of the present disclosure.
FIG. 13 is a view for describing a front protection unit according to one embodiment of the present disclosure.
FIG. 14 is a view for describing a front protection unit according to one embodiment of the present disclosure.
FIG. 15 is a view for describing a radiation detector according to one embodiment of the present disclosure.
FIG. 16 is a view for describing the radiation detector according to one embodiment of the present disclosure.
FIG. 17 is a view for describing a detector wheel assembly according to one embodiment of the present disclosure.
FIG. 18 is a view for describing a radiation detector according to one embodiment of the present disclosure.
FIG. 19 is a view illustrating a detector wheel assembly according to one embodiment of the present disclosure.
FIG. 20 is a view illustrating the detector wheel assembly according to one embodiment of the present disclosure.
FIG. 21 is a view for describing a detector wheel according to one embodiment of the present disclosure.
FIG. 22 illustrates a radiation detector according to one embodiment of the present disclosure.
FIG. 23 is a view for describing a detector wheel according to one embodiment of the present disclosure.
FIG. 24 is a view for describing the detector wheel according to one embodiment of the present disclosure.
FIG. 25 is a view for describing a radiation detector according to one embodiment of the present disclosure.
FIG. 26 is a view for describing the radiation detector according to one embodiment of the present disclosure.

### [Modes of the Invention]

The advantages and features of disclosed embodiments and methods of achieving the same will be clearly understood through the following embodiments described with reference to the accompanying drawings. However, the present disclosure is not limited to the embodiments disclosed below and is realized in various other forms. The present embodiments make the present disclosure complete and are provided to completely inform one of ordinary skill in the art to which the present disclosure pertains of the scope of the present disclosure.

The terms used in the present specification will be briefly described, and the disclosed embodiments will be described in detail.

Although the terms used herein are selected from among general terms that are currently and widely used in consideration of functions in embodiments of the present disclosure, these may be changed according to the intentions of those skilled in the art, precedents, or the advent of new technology. In addition, in a specific case, some terms may be arbitrarily selected by applicants. In this case, meanings thereof will be described in detail in a corresponding description of embodiments of the present invention. Accordingly, the terms used in the present disclosure should be defined on the basis of the meaning of the terms and the contents throughout the present disclosure rather than simple names of the terms.

As used herein, the singular forms are intended to also include the plural forms, unless the context clearly indicates otherwise. Further, the plural forms are intended to also include the singular forms, unless the context clearly indicates otherwise.

Throughout this specification, when a part "includes" a component, another component may be further included, rather than excluding the presence of the other component, unless otherwise described.

Further, the term "part" described in the specification refers to software or a hardware component, and the "part" performs certain functions. However, the "part" is not limited to the software or hardware. The "part" may be configured to reside on an addressable storage medium or may be configured to play one or more processors. Accordingly, the "part" may include, for example, components such as software components, object-oriented software components, class components, and task components, processes, functions, attributes, procedures, subroutines, segments of program code, drivers, firmware, microcodes, circuitry, data, databases, data structures, tables, arrays, and variables. Components and functions provided in "parts" may be combined into a smaller number of components and "parts" or may be further separated into additional components and "parts."

According to one embodiment of the present disclosure, the "part" may be implemented with a processor or a memory. The term "processor" should be interpreted broadly to include a general purpose processor, a central processing unit (CPU), a microprocessor, a digital signal processor (DSP), a controller, a microcontroller, a state machine, or the like. In some environments, the "processor" may refer to an application-specific integrated circuit (ASIC), a programmable logic device (PLD), a field-programmable gate array (FPGA), or the like. The term "processor" may refer to, for example, combinations of processing devices, such as a combination of a DSP and a microprocessor, a combination of a plurality of microprocessors, a combination of one or more microprocessors in combination with a DSP core, and a combination of any other such components.

The term "memory" should be interpreted broadly to include any electronic component that can store electronic information. The term "memory" may refer to any of various types of processor-readable media, such as a random-access memory (RAM), a read-only memory (ROM), a non-volatile random-access memory (NVRAM), a programmable read-only memory (PROM), an erase-programmable read-only memory (EPROM), an electrically erasable PROM (EEPROM), a flash memory, a magnetic or optical data storage device, a register, and the like. When a processor is capable of reading information from and/or writing information to a memory, the memory is determined to be in electronic communication with the processor. A memory integrated in a processor is in electronic communication with the processor.

Hereinafter, embodiments will be described in detail with reference to the accompanying drawings so that those skilled in the art to which the present disclosure pertains may easily carry out the invention. In addition, parts irrelevant to the description are omitted in the drawings in order to clearly explain the present disclosure.

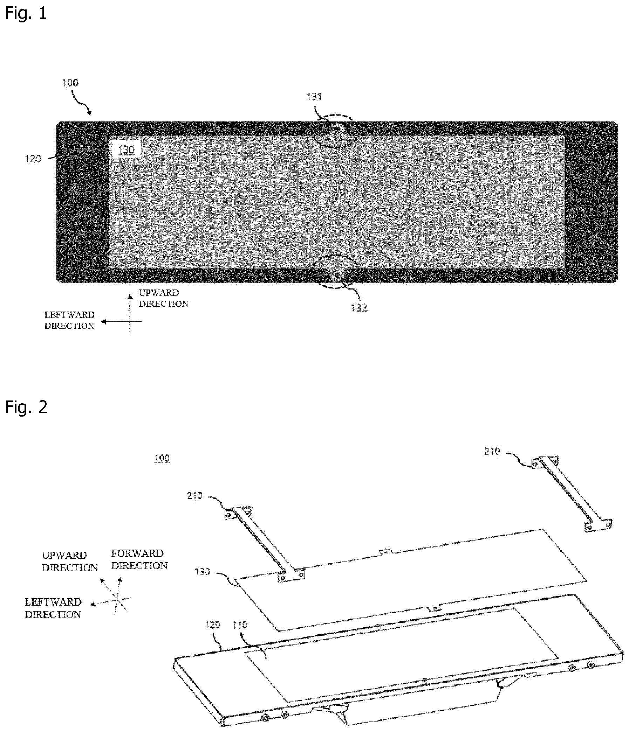

FIG. 1 is a front view illustrating a radiation detector according to one embodiment of the present disclosure. FIG. 2 is a front view illustrating the radiation detector according to one embodiment of the present disclosure.

Hereinafter, the radiation detector will be described with reference to FIGS. 1 and 2.

A radiation detector 100 of the present disclosure may be a device that detects radiation emitted from a radiation source and transmitted through a subject. The radiation may include at least one of X-rays, gamma rays, and some ultraviolet rays. The radiation detector 100 may detect the radiation to obtain a radiographic image of the subject. For example, the radiographic image obtained by the radiation detector 100 may include at least one of an X-ray image and a computed tomography (CT) image.

The radiation detector 100 may include a radiation detection panel 110. The radiation detection panel may be divided into a indirect conversion type radiation detection panel that uses a scintillator to obtain an electric signal indirectly from visible light, and a direct conversion type radiation detection panel that uses photoconductors to obtain an electric signal directly from radiation, depending on a method of obtaining the electric signal, or may be divided into a charge-coupled device (CCD) type radiation detection panel that uses a CCD, a complementary metal-oxide-semiconductor (CMOS) type radiation detection panel that uses a crystalline silicon CMOS device, and an a-Si type radiation detection panel that uses an amorphous silicon thin-film transistor (TFT) substrate, depending on the type of device that generates the electric signal.

The radiation detector 100 including the radiation detection panel 110 may be equipped with various sensors to realize digital image data with the electric signal and position information of the sensor proportional to the amount of incident radiation. The radiation detector 100 may obtain image capturing results close to real time, secure high resolution and a wide dynamic range with relatively little radiation, and, due to the nature of digital data, allow easy storage and processing of the image capturing results. The radiation detector 100 includes a readout signal part that reads an electrical signal output from a pixel array, a gate driver that turns on a switching element so that the readout signal part can read the electrical signal, and the like, and the electrical signal detected by the readout signal part is converted into an image signal through a certain processing process in a controller or the like provided on a main board and then transmitted to a display device for displaying an X-ray image.

The radiation detector 100 may include a configuration including at least one of the pixel array, the readout signal part, a gate driver circuit part, and the main board. The readout signal part may be implemented as a plurality of readout integrated circuits (ROICs) in the form of a film, and each of the ROICs may be coupled to the main board by a connector.

The radiation detector 100 may include a light-receiving element that detects X-rays and generates an electric signal, and a readout circuit part that reads the generated electric signal. A control part may process the electric signal output from the readout circuit part and then generate X-ray image data that forms an X-ray image. The generated X-ray image data may be stored in a storage part together with (or separately from) detector state information or information related to X-ray imaging.

In order for the radiation detector 100 to sequentially perform operations of detecting X-ray information and transmitting the detected X-ray information to an external computer, the radiation detector 100 may use a power and data cable through which power (or power source) supply and data communication are performed together.

Further, the radiation detector 100 may use Wi-Fi and Gigabit Ethernet for wired and wireless data transmission. In addition, the control part of the radiation detector 100 may be coupled to and communicate with a workstation for variables for driving an image sensor, and the like.

The radiation detection panel 110 may extend in a first direction. The first direction may be a leftward direction. However, the present disclosure is not limited thereto, and the first direction may be a rightward direction. The radiation detection panel 110 may detect radiation incident on a first surface thereof. Here, the first surface may be a front surface of the radiation detection panel 110. The radiation detection panel 110 may have flexibility. That is, the radiation detection panel is flexible and thus bendable. When a surface of a subject has a round surface, the radiation detection panel 110 may be bent and brought into close contact with the surface of the subject. Since the radiation detection panel 110 is positioned in close contact with the surface of the subject, sharpness of a radiographic image may be improved.

The radiation detector 100 may include a bending support unit 120. The bending support unit 120 may be brought into contact with a second surface of the radiation detection panel 110 opposite to the first surface. The second surface may be a rear surface of the radiation detection panel 110. The bending support unit 120 may support the radiation detection panel 110. As described above, since the radiation detection panel 110 is flexible and thus bendable, it may be difficult to keep the radiation detection panel 110 stationary with respect to the subject without the bending support unit 120. This is because the radiation detection panel 110 is likely to be easily deformed by the movement of the subject or an external force. Accordingly, the bending support unit 120 may be a component for supporting the radiation detection panel 110 so that the radiation detection panel 110 is maintained in a certain shape after being bent. The bending support unit 120 may adjust the bending of the radiation detection panel 110 around a bending axis that is parallel to a second direction intersecting the first direction. That is, the radiation detection panel 110 may also be bent as much as the bending support unit 120 is bent. Here, the second direction may be an upward direction. However, the present disclosure is not limited thereto, and the second direction may be a downward direction.

The bending support unit 120 may include various components for the operations of the radiation detector 100. For example, the bending support unit 120 may include at least one of a control part, a communication part, an input part, and an output part for the operations of the radiation detector 100. Further, as illustrated in FIG. 2, the radiation detection panel 110 may be embedded in the bending support unit 120. However, the present disclosure is not limited thereto.

The radiation detector 100 may include a front protection unit 130. The front protection unit 130 may be positioned at the radiation detection panel 110 in a third direction to protect the radiation detection panel 110. Here, the third direction may refer to a forward direction.

The front protection unit 130 may have a greater area than the radiation detection panel 110 exposed from the bending support unit 120 to cover the radiation detection panel 110. At least a portion of the front protection unit 130 may be fixed to the bending support unit 120. The front protection unit 130 may not be fixed to the radiation detection panel 110. In addition, only a portion of the front protection unit 130 may be coupled to the bending support unit 120. Accordingly, the front protection unit 130 may have flexibility and may protect the radiation detection panel 110, while also preventing the front protection unit 130 from causing damage to the bending support unit 120 and the radiation detection panel 110. The fixing of the front protection unit 130 and the bending support unit 120 will be described in detail below.

Further, the front protection unit 130 may be formed integrally. That is, the front protection unit 130 may have the form of a single panel, rather than being formed by a combination of various components. For example, the front protection unit 130 may be manufactured by cutting or folding a single plate of a predetermined material. However, the present disclosure is not limited thereto.

The front protection unit 130 may have flexibility. Accordingly, the front protection unit 130 may also be bent according to the bending of at least one of the radiation detection panel 110 and the bending support unit 120. In addition, the front protection unit 130 may be attachable to and detachable from the radiation detection panel 110.

The radiation detection panel 110 may already be covered with a housing for protecting the radiation detection panel 110. Accordingly, the radiation detection panel 110 may also be protected from external impact by the housing. The front protection unit 130 may be an additional means for protecting the radiation detection panel 110 in addition to the housing. The housing for protecting the radiation detection panel 110 is bonded to the radiation detection panel 110, and thus when there is an issue with a material for protecting the radiation detection panel 110, the radiation detection panel 110 itself may need to be replaced. In particular, when the subject is a rough object or the radiation detector 100 is used in a tough environment, the radiation detection panel 110 is more likely to be damaged, and thus a replacing cycle for the radiation detector 100 may be short. The radiation detector 100 of the present disclosure includes that front protection unit 130 that is replaceable, and the front protection unit 130 may be brought into contact with or approach the subject instead of the radiation detection panel 110. Accordingly, scratches may not occur on the radiation detection panel 110 but on the front protection unit 130, and a user may easily maintain the radiation detector 100 by simply only replacing the front protection unit 130. That is, by including the front protection unit 130 that is attachable and detachable, the radiation detector 100 of the present disclosure may further improve its durability.

A thickness of the front protection unit 130 may be greater than or equal to 0.1 T and less than or equal to 1 T. Further, the material of the front protection unit 130 may be a material that transmits radiation. Further, the material of the front protection unit 130 may be a material that has resilience, and may be a material that can be restored to its original state even when the material is bent by an external force.

When the thickness of the front protection unit 130 exceeds 1.0 T, transmittance and resilience (yield strength) may decrease, making it difficult to use the front protection unit 130 in the bendable radiation detector 100 and degrading the quality of a radiographic image. Further, when the thickness of the front protection unit 130 is less than or equal to 0.1 T, the front protection unit 130 may not only fail to function as a protection unit, but also have poor durability. The front protection unit 130 may have a transmittance of 85% or more. Further, when the transmittance of the front protection unit 130 is lower than 85%, high-energy band radiation must be irradiated to obtain a radiographic image, which may adversely affect a circuit board provided in the detector due to excessive energy exposure, and may also increase radiation exposure of the subject. When the front protection unit 130 having a thickness of 1 T or more is used to protect the circuit board from excessive energy exposure, there may be a problem in that the front protection unit 130 is damaged or fails to recover when bent. In addition, the yield strength of the front protection unit 130 may be greater than or equal to 20 MPa and less than or equal to 30 MPa. For example, the yield strength of the front protection unit 130 may be 23 MPa. The front protection unit 130 having such physical characteristics may maintain appropriate elasticity when bent and may enable repeated bending and flattening movements without affecting a TFT and the circuit board of the radiation detector 100.

The material of the front protection unit 130 may be at least one of a stainless sheet material, a copper sheet material, and carbon tool steel. However, the present disclosure is not limited thereto, and the material of the front protection unit 130 may be a composite material sheet mixed with at least one of a stainless steel material, a copper material, and carbon tool steel. The carbon tool steel usable as the front protection unit 130 may be one of SK1, SK2, SK3, SK4, SK5, SK6, and SK7. In order to increase surface hardness of the front protection unit 130, the material may be subjected to post-processing. For example, heat treatment, physical vapor deposition (PVD), or diamond-like carbon (DLC) coating may be performed on the material. The front protection unit 130, by using the above-described material and thickness, may maintain bendability while returning to its original state. Further, since the front protection unit 130 allows radiation to pass therethrough, the front protection unit 130 may have little effect on the radiographic image. Further, the front protection unit 130 may secure strength sufficient to protect the radiation detection panel 110. As described above, the material and thickness of the front protection unit 130 may ensure at least one of optimal bendability, restorability, and radiolucency of the front protection unit 130, which has been experimentally verified. Further, even when an external material applies a force to the detector, only the front protection unit 130 is damaged, and thus the same performance as a new detector may be maintained by simply replacing the front protection unit 130, thereby enhancing user convenience.

Referring to FIG. 1, the front protection unit 130 may include an upper fixing part 131. Further, the upper fixing part 131 may be formed to protrude upward from an upper side of the front protection unit 130. The front protection unit 130 may include a lower fixing part 132. The lower fixing part 132 may be formed to protrude downward from a lower side of the front protection unit 130. Holes may be formed in the upper fixing part 131 and the lower fixing part 132. The holes formed in the upper fixing part 131 and the lower fixing part 132 may be circular holes, rather than laterally elongated holes. However, the present disclosure is not limited thereto. The upper fixing part 131 and the lower fixing part 132 may be screw-coupled to the bending support unit 120. That is, a screw may pass through the upper fixing part 131 and the lower fixing part 132 and may be coupled to the bending support unit 120.

The upper fixing part 131 and the lower fixing part 132 may be positioned at the center of the front protection unit 130 in a left-right direction. That is, a distance from each of the upper fixing part 131 and the lower fixing part 132 to a left end of the front protection unit 130 may be the same as a distance from each of the upper fixing part 131 and the lower fixing part 132 to a right end of the front protection unit 130. However, the present disclosure is not limited thereto.

The upper fixing part 131 and the lower fixing part 132 may prevent the front protection unit 130 from moving away from one of the radiation detection panel 110 and the bending support unit 120. In addition, since the upper fixing part 131 and the lower fixing part 132 are formed to protrude from the front protection unit 130, deformation of the front protection unit 130 may be minimized. For example, when a force is applied to the front protection unit 130, the force may be applied to the fixed upper fixing part 131 and lower fixing part 132, and since deformation of the upper fixing part 131 and the lower fixing part 132 has little effect on the generation of a radiographic image, there may be no problem in using the radiation detector 100 even when deformation occurs in the upper fixing part 131 and the lower fixing part 132.

In addition, by minimizing the coupling between the front protection unit 130 and the bending support unit 120, damage to the radiation detector 100 caused by the front protection unit 130 may be minimized. As described above, the front protection unit 130 may come into contact with and approach the subject and thus may receive a large external force. Since the external force is not transmitted to the radiation detection panel 110 or the bending support unit 120 through the front protection unit 130, damage to the radiation detector 100 may be minimized.

Further, since the front protection unit 130 is brought into close contact with the radiation detection panel 110 by the upper fixing part 131 and the lower fixing part 132, the image of the radiation detector 100 may not be distorted by the front protection unit 130.

Referring to FIG. 2, the radiation detector 100 may include fixing brackets 210. The fixing brackets 210 may include a left fixing bracket 210 and a right fixing bracket 210. At least a portion of the fixing bracket 210 may be positioned in the third direction of at least one of the bending support unit 120 and the front protection unit 130. The third direction may refer to the forward direction. The fixing bracket 210 may cover at least a portion of one side of the front protection unit 130. For example, the left fixing bracket 210 may cover at least a portion of a left side of the front protection unit 130. In addition, the right fixing bracket 210 may cover at least a portion of a right side of the front protection unit 130. The fixing bracket 210 may be fixed to the bending support unit 120.

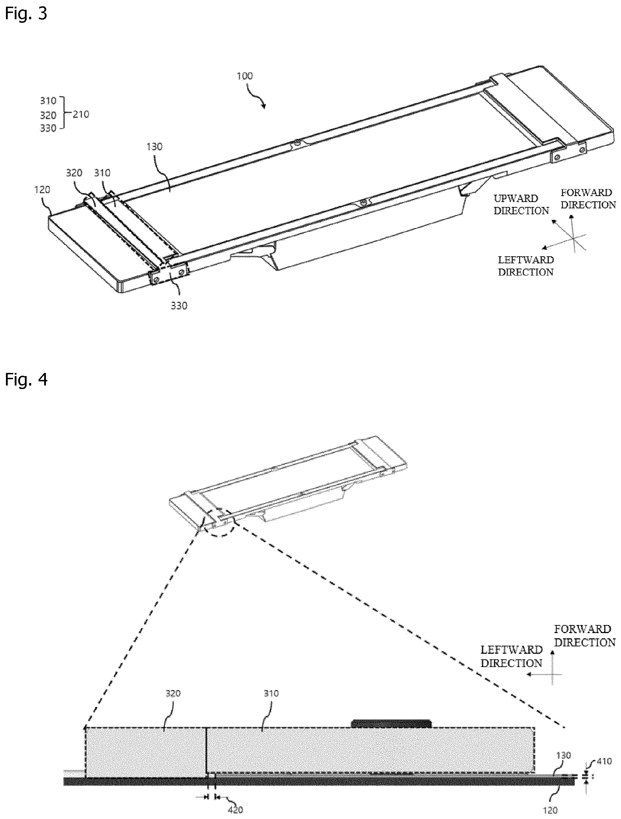

FIG. 3 is a view for describing a fixing bracket according to one embodiment of the present disclosure. Further, FIG. 4 is a view for describing the fixing bracket according to one embodiment of the present disclosure.

FIG. 3 illustrates a perspective view of a radiation detector 100. FIG. 4 illustrates a cross section of the radiation detector 100. More specifically, FIG. 4 illustrates a cross-sectional view of a fixing bracket 210.

Referring to FIGS. 3 and 4, the fixing bracket 210 may include a protective cover 310. The protective cover 310 may cover at least a portion of one side of the front protection unit 130. For example, the protective cover 310 may cover at least a portion of a left side of the front protection unit 130. In addition, the protective cover 310 may cover at least a portion of a right side of the front protection unit 130. Referring to FIG. 4, the front protection unit 130 may be positioned between the protective cover 310 and the bending support unit 120. FIG. 3 illustrates the fixing bracket 210 divided by a dotted line, but this is only for description purposes, and the dotted line is not actually drawn on the actual fixing bracket 210.

Referring to FIGS. 3 and 4, the fixing bracket 210 may include a fixing-bracket frame 320. The fixing-bracket frame 320 may be coupled to the protective cover 310 in a first direction. The first direction may be, for example, a leftward direction. However, the present disclosure is not limited thereto, and the first direction may be a rightward direction. The fixing-bracket frame 320 may be positioned on a left side of the protective cover 310 of the left fixing bracket 210. The fixing-bracket frame 320 may be positioned on a right side of the protective cover 310 of the right fixing bracket 210. The fixing-bracket frame 320 may be in surface contact with the bending support unit 120 so that the fixing bracket 210 does not shake on the bending support unit 120.

Referring to FIG. 3, the fixing bracket 210 may include a fixing-bracket fixing part 330. The fixing-bracket fixing part 330 may be coupled to the fixing-bracket frame 320 in a second direction. The fixing-bracket fixing part 330 may be coupled to the fixing-bracket frame 320 in a direction opposite to the second direction. The second direction may be an upward direction. However, the present disclosure is not limited thereto, and the second direction may be a downward direction. The fixing-bracket fixing part 330 may have a surface perpendicular to the fixing-bracket frame 320. That is, when the fixing-bracket frame 320 is parallel to a front surface of the bending support unit 120, the fixing-bracket fixing part 330 may be parallel to a lower or upper surface of the bending support unit 120. The fixing-bracket fixing part 330 may be coupled to at least one of the lower and upper surfaces of the bending support unit 120. The fixing-bracket fixing part 330 may be screw-coupled to the bending support unit 120.

Referring to FIG. 4, one side surface of the protective cover 310 may be formed to be concave in a third direction with respect to one side surface of the fixing-bracket frame 320. The third direction may refer to a forward direction. The reason that one side surface of the protective cover 310 is concavely formed in the third direction with respect to one side surface of the fixing-bracket frame 320 may be to provide a space for the protective cover 310 to accommodate the front protection unit 130. A height 410 between one side surface of the protective cover 310 and one side surface of the fixing-bracket frame 320 may be greater than or equal to a thickness of the front protection unit 130. By covering at least a portion of the front protection unit 130 with the protective cover 310 in this manner, the protective cover 310 may aid the front protection unit 130 to bend or return to its original state without any problem. In addition, the protective cover 310 may help maintain a constant distance between the front protection unit 130 and the radiation detection panel 110. That is, the protective cover 310 may prevent the left and right sides of the front protection unit 130 from moving away from the radiation detection panel 110.

In addition, when the bending support unit 120 is unfolded as shown in FIGS. 3 and 4, a space 420 may be formed between an end of one side of the front protection unit 130 and the fixing-bracket frame 320 in the first direction. Here, the first direction may refer to a leftward direction. In addition, unlike FIGS. 3 and 4, as the bending support unit 120 is bent, the space 420 between the end of one side of the front protection unit 130 and the fixing-bracket frame 320 in the first direction may be gradually reduced. When the bending support unit 120 is unfolded in this manner, the space 420 is formed between the end of one side of the front protection unit 130 and the fixing-bracket frame 320 in the first direction, so that the protective cover 310 may cover the front protection unit 130 without any problem even when the bending support unit 120 is bent.

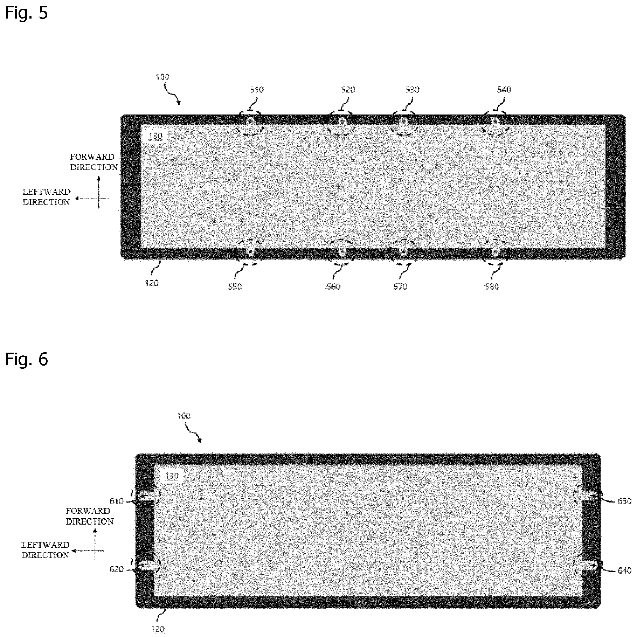

FIG. 5 is a view for describing a front protection unit according to one embodiment of the present disclosure.

In FIGS. 1 to 4, examples in which the fixing part included in the front protection unit 130 is positioned at the center of the front protection unit 130 in the left-right direction have been described. However, the present disclosure is not limited thereto. As illustrated in FIG. 5, a fixing part of a front protection unit 130 may be positioned at a position other than the center of the front protection unit 130 in the left-right direction. For example, the front protection unit 130 may include upper fixing parts 510, 520, 530, and 540. In addition, the front protection unit 130 may include lower fixing parts 550, 560, 570, and 580.

FIG. 5 illustrates that four upper fixing parts 510, 520, 530, and 540 are included on an upper side of the front protection unit 130, and four lower fixing parts 550, 560, 570, and 580 are included on a lower side thereof. However, the present disclosure is not limited thereto. Two or more upper fixing parts may be provided. In addition, two or more lower fixing parts may be provided. Further, the upper fixing parts 510, 520, 530, and 540 and the lower fixing parts 550, 560, 570, and 580 may include laterally elongated holes, rather than circular holes. However, the present disclosure is not limited thereto. As described above, when the front protection unit 130 includes a plurality of upper fixing parts and a plurality of lower fixing parts, the front protection unit 130 may be firmly fixed to the bending support unit 120. Accordingly, the front protection unit 130 may be prevented from shaking with respect to the bending support unit 120. Further, a constant distance between the front protection unit 130 and the radiation detection panel 110 may be maintained. Accordingly, an image of a radiation detector 100 may not be distorted by the front protection unit 130.

FIG. 6 is a view for describing a front protection unit according to one embodiment of the present disclosure.

A front protection unit 130 may include left fixing parts 610 and 620 and right fixing parts 630 and 640. At least one of the left fixing parts 610 and 620 may be formed to protrude leftward from a left side of the front protection unit 130. In addition, at least one of the right fixing parts 630 and 640 may be formed to protrude rightward from a right side of the front protection unit 130. The right fixing parts 630 and 640 and the left fixing parts 610 and 620 may be screw-coupled to the bending support unit. The left fixing parts 610 and 620 and the right fixing parts 630 and 640 may have laterally elongated holes.

As described above, when the front protection unit 130 includes the left fixing parts 610 and 620 and the right fixing parts 630 and 640, the front protection unit 130 may be firmly fixed to the bending support unit 120. Accordingly, the front protection unit 130 may be prevented from shaking with respect to the bending support unit 120. In addition, a constant distance between the front protection unit 130 and the radiation detection panel 110 may be maintained. Accordingly, an image of a radiation detector 100 may not be distorted by the front protection unit 130. In addition, the right fixing parts 630 and 640 and the left fixing parts 610 and 620 may prevent deformation of the front protection unit 130.

In FIG. 5, the front protection unit 130 includes the upper fixing parts 510, 520, 530, and 540 and the lower fixing parts 550, 560, 570, and 580. In addition, in FIG. 6, the front protection unit 130 includes the left fixing parts 610 and 620 and the right fixing parts 630 and 640. By combining those of FIGS. 5 and 6, the front protection unit 130 may include the upper fixing parts 510, 520, 530, and 540, the lower fixing parts 550, 560, 570, and 580, the left fixing parts 610 and 620, and the right fixing parts 630 and 640. As described above, when the front protection unit 130 includes the upper fixing parts 510, 520, 530, and 540, the lower fixing parts 550, 560, 570, and 580, the left fixing parts 610 and 620, and the right fixing parts 630 and 640, the front protection unit 130 may be firmly fixed to the bending support unit 120. Accordingly, the front protection unit 130 may be prevented from shaking with respect to the bending support unit 120.

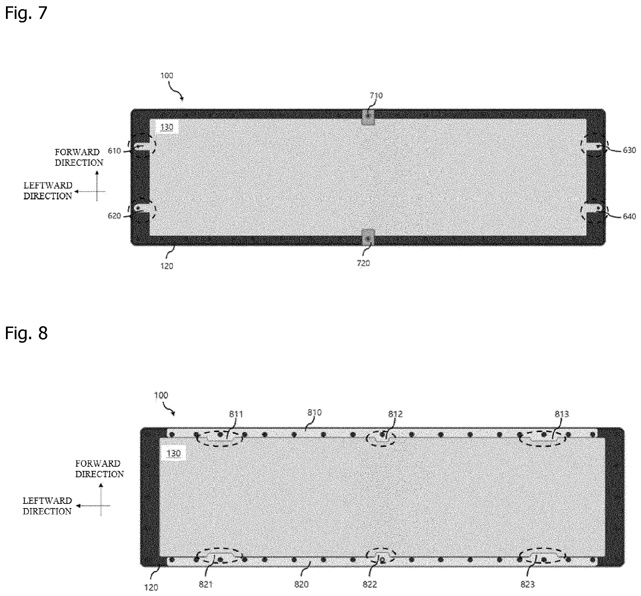

FIG. 7 is a view for describing a front protection unit according to one embodiment of the present disclosure.

Referring to FIG. 7, similarly to FIG. 6, a front protection unit 130 may include left fixing parts 610 and 620 and right fixing parts 630 and 640. In addition, the front protection unit 130 may include an upper bracket 710 and a lower bracket 720. The upper bracket 710 and the lower bracket 720 may prevent the front protection unit 130 from being lifted from the radiation detection panel 110 and the bending support unit 120.

The upper bracket 710 and the lower bracket 720 may extend upward and downward. One side of the upper bracket 710 may be screw-coupled to the bending support unit 120, and the other side thereof may be brought into contact with the front protection unit 130. Accordingly, an upper side of the front protection unit 130 may be fixed by the upper bracket 710. The other side of the lower bracket 720 may be screw-coupled to the bending support unit 120, and one side thereof may be brought into contact with the front protection unit 130. Accordingly, a lower side of the front protection unit 130 may be fixed by the lower bracket 720. Unlike FIG. 1, the upper and lower sides of the front protection unit 130 are not fixed to the bending support unit 120 but are fixed by a frictional force due to the upper bracket 710 and the lower bracket 720, and thus the front protection unit 130 may slightly move relative to the bending support unit 120, which may prevent the front protection unit 130 from being deformed due to bending. In addition, since the upper bracket 710 and the lower bracket 720 may each rotate around an axis extending forward and backward to detach the front protection unit 130 from the bending support unit 120, assemblability of the front protection unit 130 may be improved. In addition, since the front protection unit 130 may be detached from the bending support unit 120 by being moved to the left or right while the upper bracket 710 and the lower bracket 720 remain stationary, the assemblability of the front protection unit 130 may be improved.

FIG. 8 is a view for describing a front protection unit according to one embodiment of the present disclosure.

A radiation detector 100 may include fixing brackets 810 and 820. At least a portion of the fixing brackets 810 and 820 may be positioned in a third direction of at least one of the bending support unit 120 and a front protection unit 130. The third direction may be a forward direction. However, the present disclosure is not limited thereto, and the third direction may be a rearward direction. The fixing brackets may extend in a first direction. The first direction may be a leftward direction. However, the present disclosure is not limited thereto, and the first direction may be a rightward direction. The fixing brackets 810 and 820 may include an upper fixing bracket 810 and a lower fixing bracket 820.

The fixing brackets 810 and 820 may each cover at least a portion of one side of the front protection unit 130. For example, the upper fixing bracket 810 may cover at least a portion of an upper side of the front protection unit 130. In addition, the lower fixing bracket 820 may cover at least a portion of a lower side of the front protection unit 130. The fixing brackets 810 and 820 may be fixed to the bending support unit 120. For example, the fixing brackets 810 and 820 may be screw-coupled to the bending support unit 120.

The upper fixing bracket 810 may include upper detachment prevention units 811, 812, and 813 that protrude downward to prevent the front protection unit 130 from being detached. In FIG. 8, although three upper detachment prevention units 811, 812, and 813 are illustrated, the present disclosure is not limited thereto, and two or more upper detachment prevention units may be provided. Lateral lengths of the upper detachment prevention units 811, 812, and 813 may be reduced toward the center of the front protection unit 130 and may be increased toward a left side or a right side of the front protection unit 130. For example, the lateral length of the upper detachment prevention unit 812 positioned at the center may be smaller than the lateral length of each of the upper detachment prevention unit 811 positioned on the left side and the upper detachment prevention unit 813 positioned on the right side. As described above, since the lateral lengths of the upper detachment prevention units 811, 812, and 813 may be reduced toward the center of the front protection unit 130, deformation of the front protection unit 130 may be reduced. In addition, flexibility of the front protection unit 130 may be increased, allowing a surface of the radiation detector 100 to closely approach a surface of a round subject.

The lower fixing bracket 820 may include lower detachment prevention units 821, 822, and 823 that protrude upward to prevent the front protection unit 130 from being detached. In FIG. 8, although three lower detachment prevention units 821, 822, and 823 are illustrated, the present disclosure is not limited thereto, and two or more lower detachment prevention units may be provided. Lateral lengths of the lower detachment prevention units 821, 822, and 823 may be reduced toward the center of the front protection unit 130 and may be increased in the left or right side of the front protection unit 130. For example, the lateral length of the lower detachment prevention unit 822 positioned at the center may be smaller than the lateral length of each of the lower detachment prevention unit 821 positioned on the left side and the lower detachment prevention unit 823 positioned on the right side. As described above, since the lateral lengths of the lower detachment prevention units 821, 822, and 823 may be reduced toward the center of the front protection unit 130, the deformation of the front protection unit 130 may be reduced. In addition, flexibility of the front protection unit 130 may be increased, allowing the surface of the radiation detector 100 to closely approach a surface of a round subject.

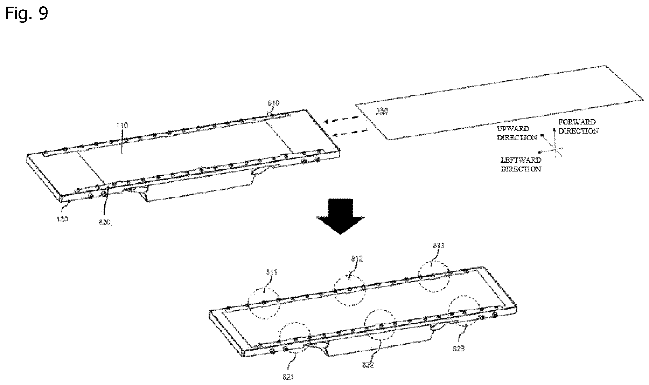

FIG. 9 is a view for describing a coupling between the bending support unit and the front protection unit according to one embodiment of the present disclosure.

Referring to FIG. 9, the upper fixing bracket 810 and the lower fixing bracket 820 may be coupled to the bending support unit 120. The front protection unit 130 may be coupled to the bending support unit 120 by being slidably moved along the upper fixing bracket 810 and the lower fixing bracket 820. The front protection unit 130 may be guided by the upper fixing bracket 810 and the lower fixing bracket 820. In addition, the front protection unit 130 may be prevented from detaching from the bending support unit 120 by the upper detachment prevention units 811, 812, and 813 and the lower detachment prevention units 821, 822, and 823.

The upper detachment prevention units 811, 812, and 813 and the lower detachment prevention units 821, 822, and 823 may be brought into contact with the front protection unit 130 to fix the front protection unit 130 to the bending support unit 120. Rear surfaces of the upper detachment prevention units 811, 812, and 813 and the lower detachment prevention units 821, 822, and 823 that are brought into contact with the front protection unit 130 may include an elastic material. For example, the elastic material may include at least one of rubber, urethane, and silicone. The upper detachment prevention units 811, 812, and 813 and the lower detachment prevention units 821, 822, and 823 may come into contact with the front protection unit 130 and prevent the front protection unit 130 from being detached from the bending support unit 120 by a frictional force. However, the present disclosure is not limited thereto, and the upper detachment prevention units 811, 812, and 813 and the lower detachment prevention units 821, 822, and 823 may not come into contact with the front protection unit 130.

According to the radiation detector 100 in FIG. 9, user convenience may be increased because a user can fix the front protection unit 130 to the bending support unit 120 simply by sliding the front protection unit 130 along the upper fixing bracket 810 and the lower fixing bracket 820 of the bending support unit 120.

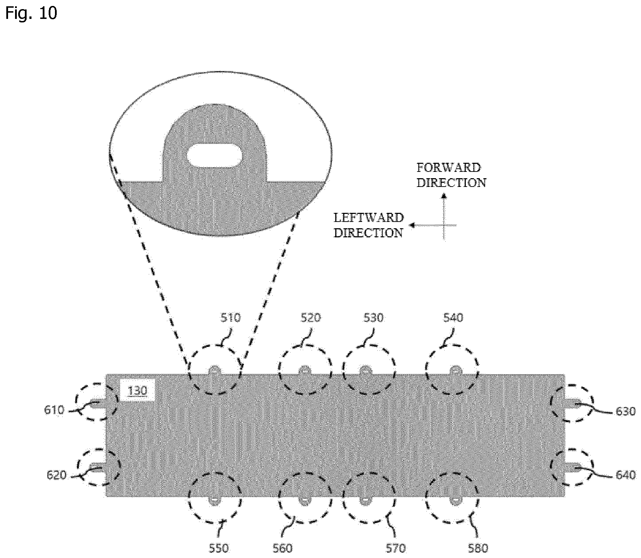

FIG. 10 is a view for describing an additional example of the front protection unit according to one embodiment of the present disclosure.

FIG. 10 illustrates a front protection unit 130 that is formed by a combination of those in FIGS. 5 and 6. Referring to FIGS. 5, 6, and 10, the front protection unit 130 may include upper fixing parts 510, 520, 530, and 540. In addition, the front protection unit 130 may include lower fixing parts 550, 560, 570, and 580. In addition, the front protection unit 130 may include left fixing parts 610 and 620 and right fixing parts 630 and 640.

The upper fixing parts 510, 520, 530, and 540, the lower fixing parts 550, 560, 570, and 580, the right fixing parts 630 and 640, and the left fixing parts 610 and 620 may be screw-coupled to the bending support unit. The upper fixing parts 510, 520, 530, and 540, the lower fixing parts 550, 560, 570, and 580, the left fixing parts 610 and 620, and the right fixing parts 630 and 640 may have laterally elongated holes. Accordingly, the front protection unit 130 may be coupled to be movable left and right with respect to the bending support unit 120. Since the front protection unit 130 is movable left and right with respect to the bending support unit 120, the front protection unit 130 may not be deformed even when a bending and unfolding process of the front protection unit 130 is repeated. In addition, the front protection unit 130 may be firmly coupled to the bending support unit 120 by the upper fixing parts 510, 520, 530, and 540, the lower fixing parts 550, 560, 570, and 580, the left fixing parts 610 and 620, and the right fixing parts 630 and 640.

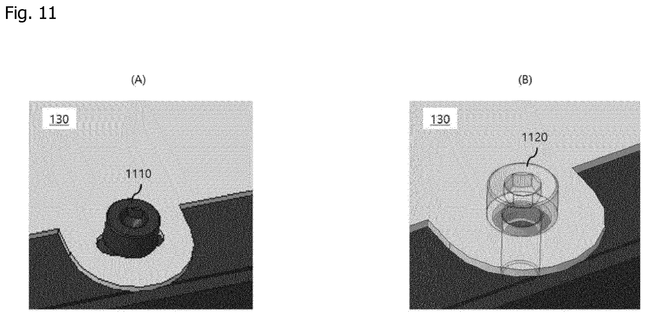

FIG. 11 is a view for describing screw coupling according to one embodiment of the present disclosure.

As described above, the front protection unit 130 may be screw-coupled to the bending support unit 120. That is, a screw may pass through the hole of the front protection unit 130 and may be coupled to the bending support unit 120.

Referring to FIG. 11A, at least one of the upper fixing parts 510, 520, 530, and 540, the lower fixing parts 550, 560, 570, and 580, the left fixing parts 610 and 620, and the right fixing parts 630 and 640 may have a laterally elongated hole. Accordingly, even when a screw 1110 is coupled, the front protection unit 130 may move left and right with respect to the bending support unit 120. Since the front protection unit 130 may move left and right with respect to the bending support unit 120, the front protection unit 130 may not cause a burden on the radiation detection panel 110 and the bending support unit 120 when the bending support unit 120 is bent. The durability of the radiation detector 100 may be increased.

Referring to FIG. 11B, at least one of the upper fixing parts 510, 520, 530, and 540, the lower fixing parts 550, 560, 570, and 580, the left fixing parts 610 and 620, and the right fixing parts 630 and 640 may have a circular hole. A diameter of the circular hole may be greater than a diameter of a screw 1120. Here, the screw 1120 may refer to a portion in which threads are formed. The diameter of the circular hole may be 1.5 times or more and 2 times or less the diameter of the screw 1120. Accordingly, the front protection unit 130 is movable left, right, up, and down with respect to the bending support unit 120. Since the front protection unit 130 is movable left, right, up, and down with respect to the bending support unit 120, the front protection unit 130 may not cause a burden on the radiation detection panel 110 and the bending support unit 120 when the bending support unit 120 is bent. As illustrated in FIG. 11B, a diameter of a head of the screw may be greater than a diameter of at least one of the circular holes of the upper fixing parts 510, 520, 530, and 540, the lower fixing parts 550, 560, 570, and 580, the left fixing parts 610 and 620, and the right fixing parts 630 and 640.

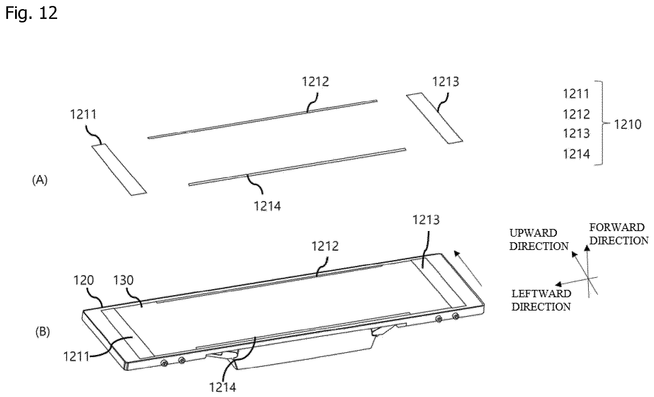

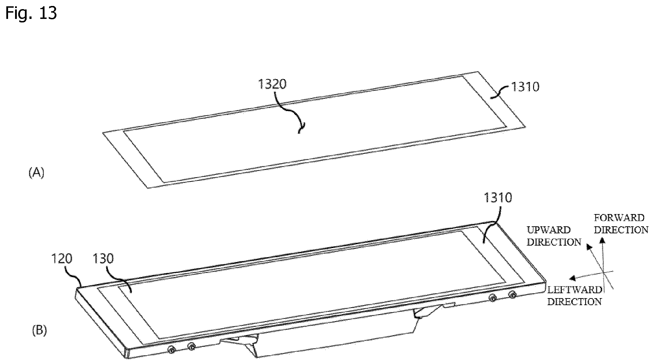

FIG. 12 is a view for describing a front protection unit according to one embodiment of the present disclosure. FIG. 13 is a view for describing a front protection unit according to one embodiment of the present disclosure.

A front protection unit 130 may include a magnetic coupling unit. The magnetic coupling unit may be positioned on a front or rear surface of the front protection unit 130. The magnetic coupling unit may be positioned on at least a portion of four sides of the front protection unit 130. The magnetic coupling unit may include a magnet or a metal material having magnetism.

The magnetic coupling unit of the front protection unit 130 may be coupled to a magnet or a metal material having magnetism of a bending support unit 120. Accordingly, the front protection unit 130 may be coupled to the bending support unit 120. As described above, when the magnetic coupling unit is used, the front protection unit 130 and the bending support unit 120 may be coupled simply by placing the front protection unit 130 on the bending support unit 120, and thus the assembly of the front protection unit 130 and the bending support unit 120 may be facilitated. In addition, when the positions of the front protection unit 130 and the bending support unit 120 are roughly aligned, the front protection unit 130 may be coupled to the bending support unit 120 in a certain direction and position by a magnetic force, thereby improving user convenience. In addition, by utilizing the polarity of the magnet, the front protection unit 130 may be configured to be coupled to the bending support unit 120 only when positioned in a specific direction.

FIG. 12A illustrates a magnetic coupling unit 1210. The magnetic coupling unit 1210 may include at least one of a left magnetic coupling unit 1211, an upper magnetic coupling unit 1212, a right magnetic coupling unit 1213, and a lower magnetic coupling unit 1214. The magnetic coupling unit 1210 may be adhered to a rear surface of the front protection unit 130. The front protection unit 130 may be coupled to the bending support unit 120 by a magnetic force of the magnetic coupling unit 1210 and the bending support unit 120.

However, the present disclosure is not limited thereto, and the magnetic coupling unit 1210 may not be adhered to the front protection unit 130. Referring to FIG. 12B, a user may place the front protection unit 130 on the bending support unit 120. The front protection unit 130 may be in a state of being movable in front of the bending support unit 120. In this case, the magnetic coupling unit 1210 may be positioned on a front surface of the front protection unit 130. The magnetic coupling unit 1210 may be coupled to the bending support unit 120 by a magnetic force. The front protection unit 130 disposed between the magnetic coupling unit 1210 and the bending support unit 120 may be fixed to the bending support unit 120 by friction.

FIG. 13A illustrates a magnetic coupling unit 1310. The magnetic coupling unit 1310 may be adhered to a rear surface of a front protection unit 130. The front protection unit 130 may be coupled to a bending support unit 120 by a magnetic force of the magnetic coupling unit 1310 and the bending support unit 120.

However, the present disclosure is not limited thereto, and the magnetic coupling unit 1310 may not be adhered to the front protection unit 130. The magnetic coupling unit 1310 may have a magnet or a metal material having magnetism. The magnetic coupling unit 1310 may be formed along four sides of the front protection unit. The magnetic coupling unit 1310 may have a shape with a hole 1320 formed at a center thereof. Referring to FIG. 13B, the magnetic coupling unit 1310 may be positioned in a third direction of the front protection unit 130. The third direction may refer to a forward direction. The magnetic coupling unit 1310 may be coupled to a magnet or a metal material having magnetism of the bending support unit 120 to couple the front protection unit 130 to the bending support unit 120. The front protection unit 130 disposed between the magnetic coupling unit 1310 and the bending support unit 120 may be fixed to the bending support unit 120 by friction.

The radiation detector 100 may include a control part and a sensor part. The sensor part may be a sensor that detects a magnetic field. The sensor part may be positioned on the bending support unit 120. The control part may detect whether the magnetic coupling units 1210 and 1310 are coupled to the bending support unit 120 on the basis of a signal of the sensor part. That is, the control part may determine that the magnetic coupling units 1210 and 1310 are coupled to the bending support unit 120 when the sensor part detects a magnetic flux greater than or equal to a threshold magnetic flux. In addition, the control part may determine that the magnetic coupling units 1210 and 1310 are coupled to the bending support unit 120 when the sensor part detects a magnetic force greater than or equal to a threshold magnetic force. In addition, the control part may determine that the magnetic coupling units 1210 and 1310 are not coupled to the bending support unit 120 when the sensor part detects a magnetic flux less than the threshold magnetic flux. In addition, the control part may determine that the magnetic coupling units 1210 and 1310 are not coupled to the bending support unit 120 when the sensor part detects a magnetic force less than the threshold magnetic force. The fact that the magnetic coupling units 1210 and 1310 are coupled to the bending support unit 120 may mean that the front protection unit 130 is coupled to the bending support unit 120. The bending support unit 120 may include a plurality of sensor parts. The control part may determine that the magnetic coupling units 1210 and 1310 are coupled to the bending support unit 120 only when all of magnetic fluxes measured by the plurality of sensor parts are greater than or equal to the threshold magnetic flux.

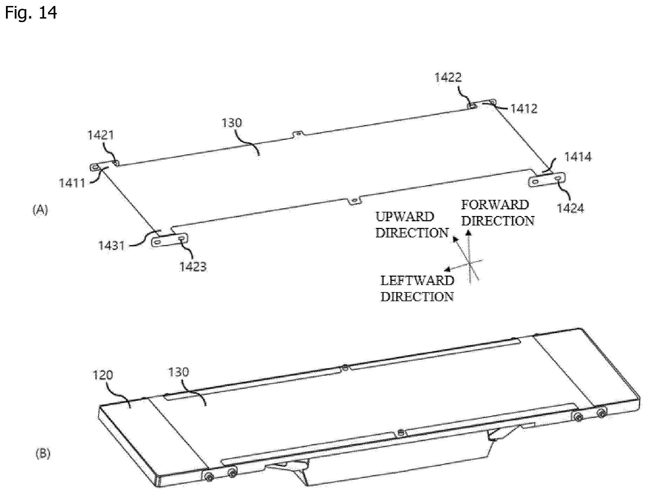

FIG. 14 is a view for describing a front protection unit according to one embodiment of the present disclosure.

Referring to FIG. 14A, a front protection unit 130 may include front-protection-unit connection parts 1411, 1412, 1413, and 1414 positioned at least one of an upper-left side, an upper-right side, a lower-left side, and a lower-right side. The front-protection-unit connection parts 1411 and 1412 positioned at the upper-left side and the upper-right side, respectively, may extend upward from the front protection unit 130. In addition, the front-protection-unit connection parts 1413 and 1414 positioned at the lower-left side and the lower-right side, respectively, may extend downward from the front protection unit 130.

Referring to FIG. 14A, the front protection unit 130 may include front-protection-unit fixing parts 1421, 1422, 1423, and 1424. The front-protection-unit fixing parts 1421, 1422, 1423, and 1424 may be coupled to the front-protection-unit connection parts 1411, 1412, 1413, and 1414, respectively. The front-protection-unit fixing parts 1421, 1422, 1423, and 1424 may be components for coupling the front protection unit 130 to the bending support unit 120. In addition, the front-protection-unit fixing parts 1421, 1422, 1423, and 1424 may each have a surface that is perpendicular to the front protection unit. An upper-left front-protection-unit fixing part 1421 may be screw-coupled to a left side of an upper surface of the bending support unit 120. An upper-right front-protection-unit fixing part 1422 may be screw-coupled to a right side of the upper surface of the bending support unit 120. A lower-left front-protection-unit fixing part 1423 may be screw-coupled to a left side of a lower surface of the bending support unit 120. A lower-right front-protection-unit fixing part 1424 may be screw-coupled to a right side of the lower surface of the bending support unit 120. At least one laterally elongated hole may be formed in each of the front-protection-unit fixing parts 1421, 1422, 1423, and 1424. Since the front protection unit 130 may move left and right with respect to the bending support unit 120 due to the elongated hole, the front protection unit 130 may not cause a burden on the radiation detection panel 110 and the bending support unit 120 when the bending support unit 120 is bent. The durability of the radiation detector 100 may be increased.

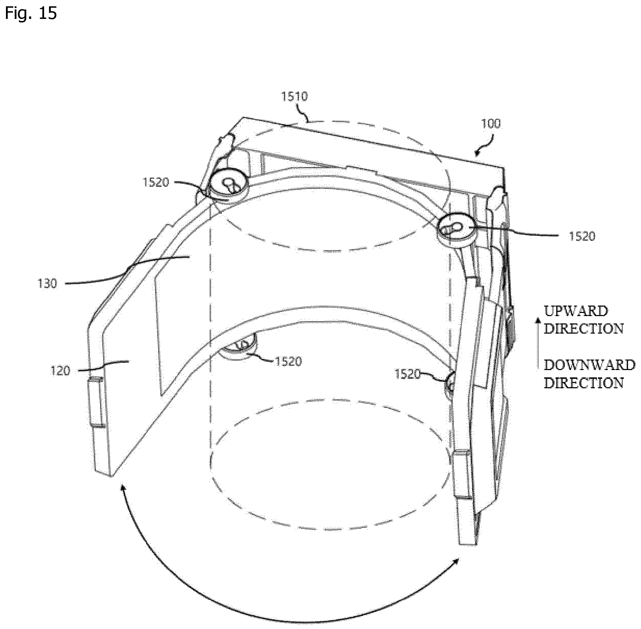

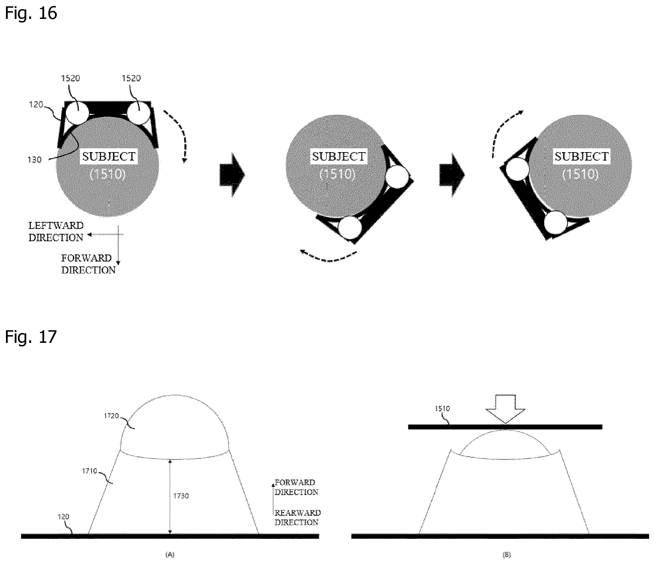

FIG. 15 is a view for describing a radiation detector according to one embodiment of the present disclosure. FIG. 16 is a view for describing the radiation detector according to one embodiment of the present disclosure.

FIG. 16 is a plan view schematically illustrating a subject and a radiation detector 100. Referring to FIGS. 15 and 16, the radiation detector 100 for detecting radiation may capture images while rotating around a subject 1510. The subject 1510 may be a spherical or cylindrical object. The subject 1510 may, for example, be a pipe. The radiation detector 100 may capture radiographic images while rotating around an outer circumferential surface of the subject 1510 to detect cracks in the pipe. Although not illustrated in FIGS. 15 and 16, a source assembly for emitting radiation may be positioned on an opposite side of the radiation detector 100.

Referring to FIG. 16, since the radiation detector 100 captures radiographic images in proximity to the subject 1510, the radiation detection panel 110 of the radiation detector 100 may be damaged by the subject 1510. However, as described above, since the radiation detector 100 of the present disclosure includes the front protection unit 130, the radiation detection panel 110 is not damaged, which allows the performance of the radiation detector 100 to be maintained for an extended period of time.

As described above, the radiation detector 100 may include the flexible radiation detection panel 110 that extends in the first direction and detects radiation incident on the first surface. Referring to FIGS. 15 and 16, the radiation detection panel 110 may be bent according to the shape of the subject 1510. Since the radiation detection panel 110 has already been described above, a redundant description thereof will be omitted.

The radiation detector 100 may include the bending support unit 120 that is in contact with the second surface of the radiation detection panel opposite to the first surface, supports the radiation detection panel 110, and adjusts bending of the radiation detection panel around a bending axis parallel to the second direction intersecting the first direction. A detailed description of the bending support unit 120 has already been provided above, and thus a redundant description thereof will be omitted.

Referring to FIGS. 15 and 16, the radiation detector 100 may include a plurality of detector wheel assemblies 1520. The plurality of detector wheel assemblies 1520 may be positioned on at least one of upper and lower sides of the bending support unit 120. Although FIGS. 15 and 16 illustrate that the radiation detector 100 includes the plurality of detector wheel assemblies 1520, the present disclosure is not limited thereto, and the radiation detector 100 may include one or more detector wheel assemblies 1520. The plurality of detector wheel assemblies 1520 may be fixed to the bending support unit 120.

The plurality of detector wheel assemblies 1520 may allow the radiation detector 100 to maintain a predetermined distance from the cylindrical subject 1510. In this manner, since the radiation detector 100 can conveniently obtain a radiographic image while rotating around the subject 1510, high-quality images of the subject 1510 may be obtained, and user convenience may be improved. This is because, when there are no multiple detector wheel assemblies 1520, a user would have to repeatedly fix the radiation detector 100 at a specific position of the subject 1510, capture images, detach the radiation detector 100 from the subject 1510, and fix the radiation detector 100 again at the specific position of the subject 1510.

The radiation detector 100 may leave scratches on a surface of the subject 1510, but the radiation detector 100 of the present disclosure includes the plurality of detector wheel assemblies 1520 to prevent the radiation detector 100 from coming into contact with the subject 1510, thereby protecting the surface of the subject 1510 from the radiation detector 100. In addition, since the radiation detector 100 rotates around the subject 1510 in close proximity thereto, scratches may occur on the radiation detector 100 due to the subject 1510. In particular, although the radiation detection panel 110, which is in close proximity to the subject 1510, may be scratched, the front protection unit 130 may prevent the radiation detection panel 110 from being scratched. The radiation detector 100 of the present disclosure may prevent scratches from occurring on the radiation detection panel 110, thereby maintaining high quality of the radiographic images.

The plurality of detector wheel assemblies 1520 may each include a suspension part. Accordingly, when the plurality of detector wheel assemblies 1520 rotate around the subject 1510, impact energy applied to the radiation detector 100 or the subject 1510 may be absorbed by the suspension part. The plurality of detector wheel assemblies 1520 may allow the radiation detector 100 to move along the outer circumferential surface of the subject. In addition, the plurality of detector wheel assemblies 1520 may be rotatable. More specifically, detector wheels included in the plurality of detector wheel assemblies 1520 may each rotate around a wheel rotation shaft. The wheel rotation shaft may be parallel to the second direction.

FIG. 17 is a view for describing a detector wheel assembly according to one embodiment of the present disclosure.

FIG. 17 illustrates a detector wheel assembly having a different form from those shown in FIGS. 15 and 16. According to various embodiments of the present disclosure, the detector wheel assembly may have the form of a bearing. When the detector wheel assembly is in the form of a bearing, the radiation detector 100 may not include the detector wheel assembly 1520 in the form illustrated in FIGS. 15 and 16. However, the present disclosure is not limited thereto, and the radiation detector 100 may include both the detector wheel assembly in the form of a bearing and the detector wheel assembly 1520 in the form illustrated in FIGS. 15 and 16.

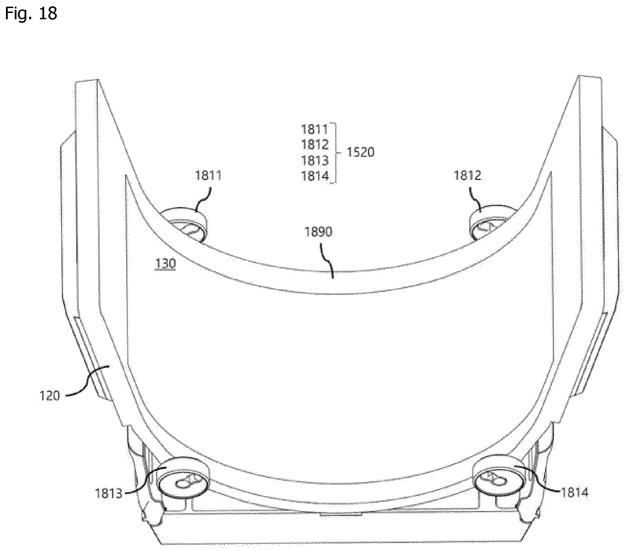

Referring to FIG. 17A, each detector wheel assembly may include an accommodation part 1710 and a bearing ball 1720. The accommodation part 1710 may be disposed on a surface of the bending support unit 120 in the third direction. The surface in the third direction may refer to a front surface. The surface in the third direction may refer to a surface facing a subject. The accommodation parts 1710 may be arranged side by side in the first direction. For example, as shown in FIG. 18, the detector wheel assemblies may be positioned along an edge 1890 of a front surface of the detector. The bearing balls 1720 of the detector wheel assemblies may be disposed on the front surface of the detector to face the forward direction. The accommodation part 1710 may be positioned on a rear side of the bearing ball 1720. As the detector wheel assemblies are arranged along the edge 1890 of the front surface of the detector, the front surface of the detector does not come into contact with the subject 1510, thereby preventing damage to the front surface of the detector from the subject 1510. In addition, the detector may smoothly rotate around the subject 1510 due to the detector wheel assemblies. Accordingly, a user may easily position the detector at various angles with respect to the subject 1510 and conveniently obtain radiographic images from various angles of the subject 1510.

The accommodation part 1710 may protrude in the third direction by 5 mm or less from the surface of the bending support unit 120 in the third direction. That is, a distance 1730 from the surface of the bending support unit 120 to a distal end of the accommodation part 1710 in the third direction may be less than or equal to 5 mm.

Referring to FIG. 17A, the bearing ball 1720 may be spherical. The bearing ball 1720 may be inserted into the accommodation part 1710 to allow the radiation detector 100 to move along the outer circumferential surface of the subject.

Although not shown in FIG. 17, the radiation detector 100 may include a braking means. The braking means may be disposed on the surface of the bending support unit 120 in the third direction. The braking means may move in the third direction based on a user input to come into contact with the subject 1510. Due to friction between the braking means and the subject 1510, the radiation detector 100 may not move with respect to the subject 1510. In addition, the braking means may move in a direction opposite to the third direction based on a user input. In this case, the radiation detector 100 may be freely movable with respect to the subject 1510.

Referring to FIG. 17B, the detector wheel assembly may include a suspension part. More specifically, the accommodation part 1710 may include the suspension part. The suspension part may include an elastic body that presses the bearing ball 1720 in the third direction. When the subject 1510 comes into contact with the bearing ball 1720, the bearing ball 1720 may be pushed in the direction opposite to the third direction (i.e., rearward). In addition, when the subject 1510 moves away from the bearing ball 1720, the position of the bearing ball 1720 may return to the state shown in FIG. 17A. Impact energy applied to the radiation detector 100 and the subject 1510 may be absorbed by the suspension part.

FIG. 18 is a view for describing a radiation detector according to one embodiment of the present disclosure.

FIG. 18 illustrates detector wheel assemblies including wheels, as in FIGS. 15 and 16. Detector wheel assemblies 1520 may be disposed on an upper side or a lower side of the bending support unit 120. The detector wheel assemblies 1520 may include an upper-left detector wheel assembly 1811, an upper-right detector wheel assembly 1812, a lower-left detector wheel assembly 1813, and a lower-right detector wheel assembly 1814.

The detector wheel included in the detector wheel assembly 1520 may protrude in a third direction by 5 mm or less than the radiation detection panel 110. Here, the third direction may be perpendicular to a first direction and a second direction. For example, the first direction may be a leftward direction, the second direction may be an upward direction, and the third direction may be a forward direction. The detector wheel included in the detector wheel assembly 1520 may protrude in the third direction by 5 mm or less compared to the front protection unit 130. A diameter of the detector wheel included in the detector wheel assembly 1520 may be less than or equal to 30 mm. However, the present disclosure is not limited thereto. The material of the detector wheel may be a material for preventing the detector wheel from slipping from the subject 1510. For example, the material of the detector wheel may be a rubber-based or urethane material.

A wheel rotation shaft included in the detector wheel assembly 1520 may be parallel to the second direction. That is, the wheel rotation shaft may extend in a direction parallel to the second direction. The wheel rotation shaft may be the center of rotation of the detector wheel. The wheel rotation shaft may be coupled to the bending support unit 120. The wheel rotation shaft may be fixed to the bending support unit 120 and thus may not rotate. However, the present disclosure is not limited thereto, and the wheel rotation shaft may be coupled to the bending support unit 120 and may rotate together with the detector wheel.

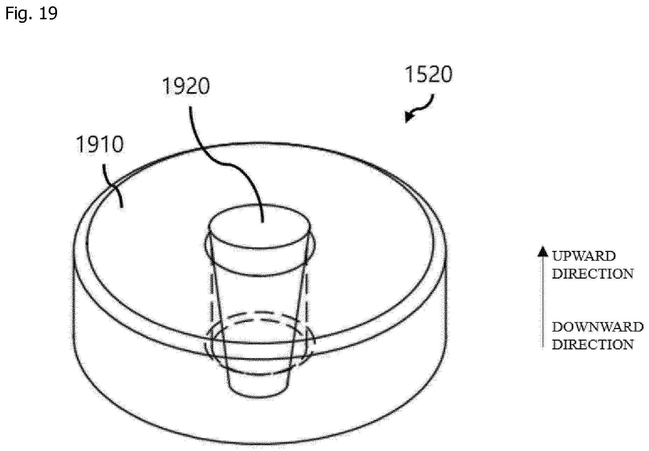

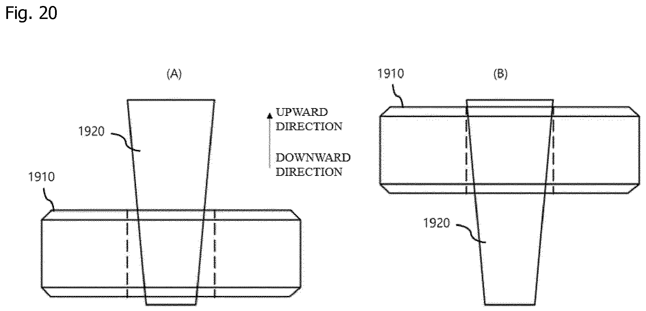

FIG. 19 is a view illustrating a detector wheel assembly according to one embodiment of the present disclosure. In addition, FIG. 20 is a view illustrating the detector wheel assembly according to one embodiment of the present disclosure.

Referring to FIG. 19, a wheel rotation shaft 1920 may have a shape that increase in diameter toward a second direction. The second direction may be an upward direction. However, the present disclosure is not limited thereto, and the second direction may be a downward direction. In addition, the wheel rotation shaft 1920 may have a shape that decreases in diameter toward the second direction. For example, the wheel rotation shaft included in each of the upper-left detector wheel assembly 1811 and the upper-right detector wheel assembly 1812 may have a shape that increases in diameter toward the upward direction. In addition, a lower side of the wheel rotation shaft included in each of the upper-left detector wheel assembly 1811 and the upper-right detector wheel assembly 1812 may be fixed to the bending support unit 120. The wheel rotation shaft included in each of the lower-left detector wheel assembly 1813 and the lower-right detector wheel assembly 1814 may have a shape that increases in diameter toward the downward direction. In addition, an upper side of the wheel rotation shaft included in each of the lower-left detector wheel assembly 1813 and the lower-right detector wheel assembly 1814 may be fixed to the bending support unit 120.

A detector wheel 1910 may have a donut shape. A hole formed inside the detector wheel 1910 may have a constant diameter. However, the present disclosure is not limited thereto. For example, similar to the wheel rotation shaft 1920, the hole formed inside the detector wheel 1910 may have a shape that increases in diameter toward the second direction. The detector wheel 1910 may rotate around the wheel rotation shaft 1920.

The detector wheel 1910 may be movable with respect to the wheel rotation shaft 1920 in the second direction and a direction opposite to the second direction. The second direction may be an upward direction.

When the detector wheel 1910 moves in the direction (i.e., a downward direction) opposite to the second direction with respect to the wheel rotation shaft 1920 and is positioned at a small-diameter portion of the wheel rotation shaft 1920, the detector wheel 1910 may be rotatable. Referring to FIG. 20A, the detector wheel 1910 may move in the downward direction with respect to the wheel rotation shaft 1920. Since the detector wheel 1910 is not interfered with by the fixed wheel rotation shaft 1920, the detector wheel 1910 may be rotatable. Accordingly, due to the rotatable detector wheel 1910, the radiation detector 100 can easily move around the subject 1510.

When the detector wheel 1910 moves in the second direction (upward direction) with respect to the wheel rotation shaft 1920 and is positioned at a large-diameter portion of the wheel rotation shaft, the rotation of the detector wheel 1910 may be restricted by a frictional force between an inner circumferential surface of the detector wheel 1910 and an outer circumferential surface of the wheel rotation shaft 1920. Accordingly, movement of the radiation detector 100 with respect to the subject 1510 may be limited. In a stationary state, the radiation detector 100 may capture a radiographic image of the subject. Since the radiation detector 100 is stationary by the detector wheel assembly 1520, the position of the radiation detector 100 with respect to the subject 1510 may remain constant, thereby improving sharpness of a radiographic image.

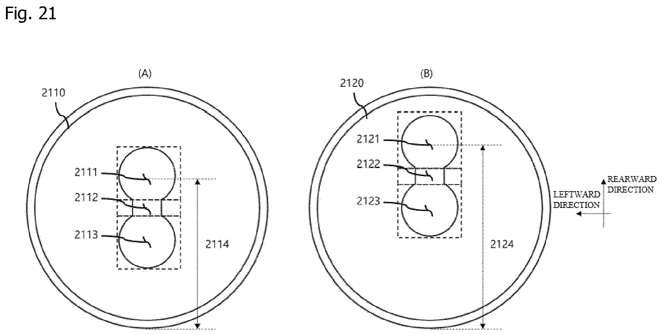

FIG. 21 is a view for describing a detector wheel according to one embodiment of the present disclosure.

Referring to FIG. 21A, a detector wheel 2110 may include a rotation hole 2113. The rotation hole 2113 may be used for rotation of the detector wheel 2110 around a wheel rotation shaft. That is, when the wheel rotation shaft is positioned in the rotation hole 2113, the detector wheel 2110 may rotate around the wheel rotation shaft. Since the rotation hole 2113 is eccentrically positioned with respect to the detector wheel 2110, the detector wheel 2110 may rotate around an eccentric axis. A diameter of the rotation hole 2113 may be greater than or equal to a diameter of the wheel rotation shaft. In addition, an inner circumferential surface of the detector wheel 2110 forming the rotation hole 2113 may be formed of a low-friction material.

Referring to FIG. 21A, the detector wheel 2110 may include a fixing hole 2111. The fixing hole 2111 may be used for fixing the detector wheel 2110 with respect to the wheel rotation shaft. That is, when the wheel rotation shaft is positioned in the fixing hole 2111, the detector wheel 2110 may not rotate due to friction between an inner circumferential surface of the detector wheel 2110 forming the fixing hole 2111 and the wheel rotation shaft. When the detector wheel 2110 does not rotate, the radiation detector 100 may be stationary with respect to the subject 1510 due to friction between an outer circumferential surface of the detector wheel and an outer circumferential surface of the subject. A center of the fixing hole 2111 may be eccentrically positioned with respect to a center of the detector wheel 2110. As a distance between the center of the fixing hole 2111 and the subject 1510 becomes closer to a major radius 2124, which is the longest distance between the center of the fixing hole 2111 and an outer circumferential surface of the detector wheel 2110, a pressing force of the detector wheel 2110 against the subject 1510 may increase. In addition, as the pressing force of the detector wheel 2110 against the subject 1510 increases, the radiation detector 100 and the subject 1510 may be more firmly fixed to each other by the detector wheel 2110. The radiation detector 100 may capture a radiographic image of the subject 1510 while being held stationary by the fixing hole 2111. A diameter of the fixing hole 2111 may be less than or equal to the diameter of the wheel rotation shaft. In addition, the inner circumferential surface of the detector wheel 2110 forming the fixing hole 2111 may be formed of a high-friction material.

Referring to FIG. 21A, the detector wheel 2110 may include a connection hole 2112. The connection hole 2112 may be a passage through which the wheel rotation shaft can move between the rotation hole 2113 and the fixing hole 2111. A width of the connection hole 2112 may be smaller than the diameter of each of the rotation hole 2113 and the fixing hole 2111. The material forming the connection hole 2112 in the detector wheel 2110 may be an elastic material. For example, the material forming the connection hole 2112 may include at least one of rubber, silicone, and urethane. However, the present disclosure is not limited thereto.

Referring to FIG. 21B, a detector wheel 2120 may include a rotation hole 2123. The rotation hole 2123 may be used for rotation of the detector wheel 2120 around a wheel rotation shaft. That is, when the wheel rotation shaft is positioned in the rotation hole 2123, the detector wheel 2120 may rotate around the wheel rotation shaft. A center of the rotation hole 2123 may be positioned at a center of the detector wheel. Since the rotation hole 2123 is positioned at the center of the detector wheel 2120, the detector wheel 2110 may rotate around the center of the detector wheel 2120. A diameter of the rotation hole 2123 may be greater than or equal to a diameter of the wheel rotation shaft. In addition, an inner circumferential surface of the detector wheel 2120 forming the rotation hole 2123 may be formed of a low-friction material.

Referring to FIG. 21B, the detector wheel 2120 may include a fixing hole 2121. The fixing hole 2121 may be used for fixing the detector wheel 2120 with respect to the wheel rotation shaft. That is, when the wheel rotation shaft is positioned in the fixing hole 2121, the detector wheel 2120 may not rotate due to friction between the inner circumferential surface of the detector wheel 2120 forming the fixing hole 2121 and the wheel rotation shaft. When the detector wheel 2120 does not rotate, the radiation detector 100 may be stationary with respect to the subject 1510 due to friction between an outer circumferential surface of the detector wheel and an outer circumferential surface of the subject. A center of the fixing hole 2121 may be eccentrically positioned with respect to a center of the detector wheel 2120. As a distance between the center of the fixing hole 2121 and the subject 1510 becomes closer to a major radius 2124, which is the longest distance between the center of the fixing hole 2121 and an outer circumferential surface of the detector wheel 2120, a pressing force of the detector wheel 2120 against the subject 1510 may increase. In addition, as the pressing force of the detector wheel 2120 against the subject 1510 increases, the radiation detector 100 and the subject 1510 may be more firmly fixed to each other by the detector wheel 2120. The radiation detector 100 may capture a radiographic image of the subject 1510 while being held stationary by the fixing hole 2121. A diameter of the fixing hole 2121 may be less than or equal to the diameter of the wheel rotation shaft. In addition, the inner circumferential surface of the detector wheel 2120 forming the fixing hole 2121 may be formed of a high-friction material.

Referring to FIG. 21B, the detector wheel 2120 may include a connection hole 2122. The connection hole 2122 may be a passage through which the wheel rotation shaft can move between the rotation hole 2123 and the fixing hole 2121. A width of the connection hole 2122 may be smaller than the diameter of each of the rotation hole 2123 and the fixing hole 2121. The material forming the connection hole 2122 in the detector wheel 2120 may be an elastic material. For example, the material forming the connection hole 2122 may include at least one of rubber, silicone, and urethane. However, the present disclosure is not limited thereto.

The structures of the detector wheels 2110 and 2120 have been described above. Hereinafter, a process in which the wheel rotation shaft moves between the fixing hole 2111 and the rotation hole 2113, and between the fixing hole 2121 and the rotation hole 2123, will be described with reference to FIGS. 19 to 22. Descriptions already provided in FIGS. 19 to 21 will be omitted.

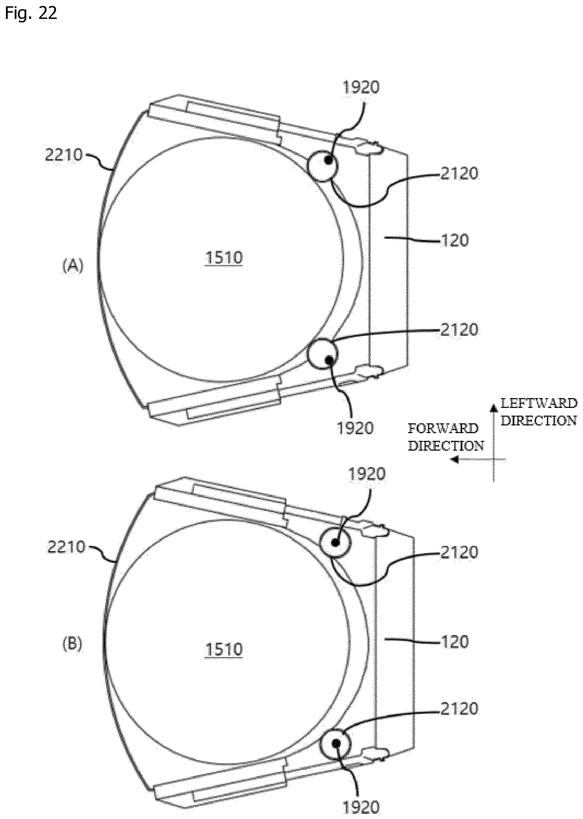

FIG. 22 illustrates a radiation detector according to one embodiment of the present disclosure.

Referring to FIGS. 19 to 22, the wheel rotation shaft 1920 may be fixed to the bending support unit 120. As shown in FIG. 20, the wheel rotation shaft 1920 may have a shape that increases in diameter toward the second direction. As described above, the inner circumferential surface of the detector wheel 2120 corresponding to the rotation hole 2123 may be formed of a material that reduces friction with the wheel rotation shaft 1920. In addition, the inner circumferential surface of the detector wheel 2120 corresponding to the fixing hole 2121 may be formed of a material that increases friction with the wheel rotation shaft.

When the detector wheel 2120 moves in the second direction with respect to the wheel rotation shaft 1920 and is positioned at a large-diameter portion of the wheel rotation shaft 1920, the wheel rotation shaft 1920 may not pass through the connection hole of the detector wheel 2120. Accordingly, the detector wheel 2120 may not allow the wheel rotation shaft 1920 to move from the fixing hole 2121 to the rotation hole 2123 or from the rotation hole 2123 to the fixing hole 2121.

Further, when the detector wheel 2120 moves in a direction opposite to the second direction with respect to the wheel rotation shaft 1920 and is positioned at a small-diameter portion of the wheel rotation shaft 1920, the wheel rotation shaft 1920 may pass through the connection hole of the detector wheel 2120. Accordingly, the detector wheel 2120 may allow the wheel rotation shaft 1920 to move from the fixing hole 2121 to the rotation hole 2123 or from the rotation hole 2123 to the fixing hole 2121.

Referring to FIG. 22A, a user may move the detector wheel 2120 in the above-described manner to position the wheel rotation shaft 1920 at the fixing hole 2121 of the detector wheel 2120. In addition, the detector wheel 2120 may be positioned such that a distance between the center of the fixing hole 2121 and the subject 1510 is close to the major radius 2124, which is the longest distance between the center of the fixing hole 2121 and the outer circumferential surface of the detector wheel 2120. Accordingly, a radiation detector 100 may be fixed to the subject 1510 by a frictional force between the detector wheel 2120 and the subject 1510, and a frictional force between a connection band 2210 and the subject 1510. Thus, the radiation detector 100 may capture a high-resolution radiographic image in a fixed state.

Referring to FIG. 22B, a user may move the detector wheel 2120 in the above-described manner to position the wheel rotation shaft 1920 at the rotation hole 2123 of the detector wheel 2120. In addition, the detector wheel 2120 may not come into contact with the subject 1510, or even when the detector wheel 2120 comes into contact with the subject 1510, the detector wheel 2120 may be rotatable around the wheel rotation shaft 1920. Accordingly, the radiation detector 100 may move freely relative to the subject 1510.

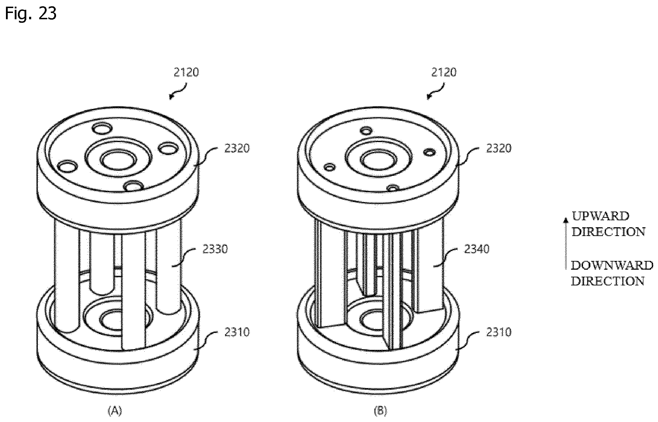

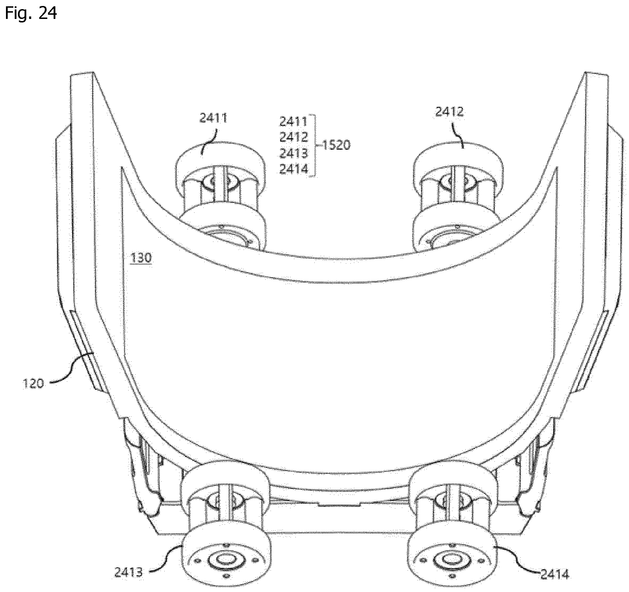

FIG. 23 is a view for describing a detector wheel according to one embodiment of the present disclosure. FIG. 24 is a view for describing the detector wheel according to one embodiment of the present disclosure.

A detector wheel assembly 1520 may be coupled to the bending support unit 120. The detector wheel assembly 1520 may include a detector wheel 2120. The detector wheel 2120 may include a first wheel 2310. In addition, the detector wheel 2120 may include a second wheel 2320. The second wheel 2320 may be positioned in a second direction with respect to the first wheel 2310. The second direction may be an upward direction. However, the present disclosure is not limited thereto, and the second direction may be a downward direction. The second wheel 2320 may be parallel to the first wheel 2310 and may have the same diameter as the first wheel 2310. However, the present disclosure is not limited thereto, and the diameter of the second wheel 2320 may be different from the diameter of the first wheel 2310.

Referring to FIG. 23A, the detector wheel 2120 may include a plurality of shafts 2330. The plurality of shafts 2330 may couple one side of the first wheel 2310 to the other side of the second wheel 2320. In addition, the plurality of shafts 2330 may extend in a direction parallel to a wheel rotation shaft. The wheel rotation shaft extends in the second direction, and the plurality of shafts 2330 may also extend in the second direction. As shown in FIG. 23A, the plurality of shafts may each have a cylindrical shape. However, the present disclosure is not limited thereto, and as shown in FIG. 23B, the plurality of shafts may be of a wing type.

Referring to FIG. 24, a radiation detector 100 may include detector wheel assemblies 1520 each including the detector wheel 2120 described in FIG. 23. The detector wheel assemblies 1520 may be disposed on an upper or lower side of the bending support unit 120. The detector wheel assemblies 1520 may include an upper-left detector wheel assembly 2411, an upper-right detector wheel assembly 2412, a lower-left detector wheel assembly 2413, and a lower-right detector wheel assembly 2414.

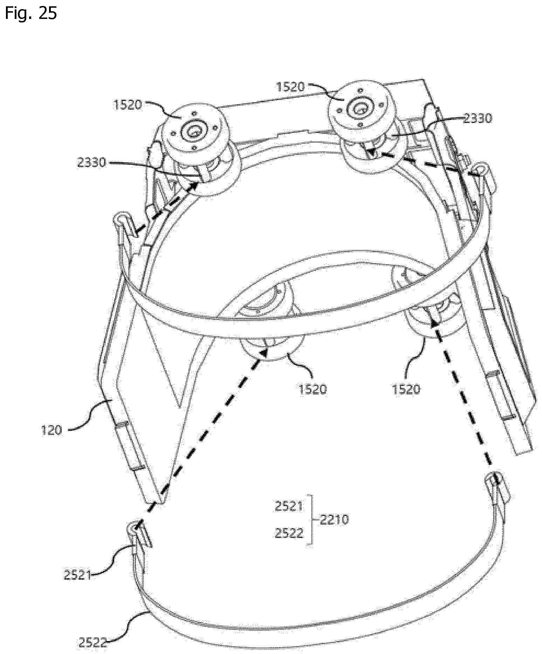

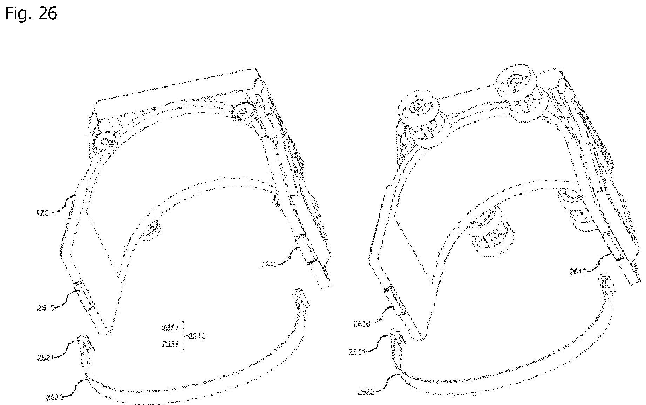

FIG. 25 is a view for describing a radiation detector according to one embodiment of the present disclosure. FIG. 26 is a view for describing the radiation detector according to one embodiment of the present disclosure.

Referring to FIG. 25, a radiation detector 100 may include the connection band 2210. The connection band 2210 may be a component configured to wrap around a subject together with the bending support unit 120. That is, the subject 1510 may be positioned inside a circumference formed by the connection band 2210 and the bending support unit 120. The connection band 2210 may be a component configured to fix the radiation detector 100 to the subject.

The connection band 2210 may include fixing hooks 2521 and a fixing band 2522. The fixing hooks 2521 may be components configured to be hooked onto the shafts 2330 included in different detector wheel assemblies 1520. The connection band 2210 may include a plurality of fixing hooks 2521. The plurality of shafts 2330 and 2340 described with reference to FIGS. 23 and 24 may be components configured to allow the fixing hooks 2521 of the connection band to be hooked thereon.

The fixing band 2522 may couple the plurality of fixing hooks 2521 to each other and may be formed of an elastic material. That is, one fixing hook 2521 may be positioned at one end of the fixing band 2522, and another fixing hook 2521 may be positioned at the other end of the fixing band 2522. The fixing band 2522 may stretch, depending on a size of the subject 1510, due to elasticity thereof. In addition, the fixing band 2522 may come into contact with the subject 1510 and fix the radiation detector 100 to the subject 1510 by friction between the fixing band 2522 and the subject 1510.

Referring to FIG. 26, the bending support unit 120 of the radiation detector 100 may include rings 2510. The rings may be components for coupling the connection band 2210. One ring 2510 may be formed at a left end of the radiation detector 100. In addition, another ring 2510 may be formed at a right end of the radiation detector 100. The plurality of fixing hooks 2521 of the connection band 2210 may be hooked onto the ring 2510 at the left end and the ring 2510 at the right end of the radiation detector 100 so that the connection band 2210 and the radiation detector 100 may form a circumference, and the subject 1510 may be positioned inside the circumference.

Various embodiments have been described above. Those of ordinary skill in the art to which the present invention pertains should understand that the present invention may be implemented in modified forms within the scope not departing from essential characteristics of the present invention. Therefore, the embodiments disclosed herein should be considered in an illustrative aspect instead of a limiting aspect. The scope of the present invention is shown by the claims rather than the above description, and all differences present within the scope equivalent to the claims should be construed as being included in the present invention.

Meanwhile, the above-described embodiments of the present invention may be written by a program that may be executed by a computer, and may be implemented by a universal digital computer operating a program using computer-readable recording media. The computer-readable recording media include storage media such as magnetic storage media (for example, a ROM, a floppy disk, a hard disk, and the like) and optical readable media (for example, a compact disc (CD)-ROM, a digital versatile disc (DVD), and the like).

## Claims

1. A radiation detector for detecting radiation, comprising:
a flexible radiation detection panel that extends in a first direction and detects radiation incident on a first surface thereof;
a bending support unit that is in contact with a second surface opposite to the first surface of the radiation detection panel, supports the radiation detection panel, and adjusts bending of the radiation detection panel around a bending axis parallel to a second direction intersecting the first direction; and
a plurality of rotatable detector wheel assemblies that are positioned on at least one of an upper side and a lower side of the bending support unit, allow the radiation detector to maintain a predetermined distance from a subject, and allow the radiation detector to move along an outer circumferential surface of the subject.

2. The radiation detector of claim 1, wherein each of the detector wheel assemblies includes:
a detector wheel that protrudes by 5 mm or less in a third direction perpendicular to the first direction and the second direction compared to the detection panel, and has a diameter of 30 mm or less; and
a wheel rotation shaft that is parallel to the second direction, is a rotation center of the detector wheel, and is coupled to the bending support unit.

3. The radiation detector of claim 2, wherein the wheel rotation shaft has a shape that increases in diameter toward the second direction,
the detector wheel has a donut shape and is movable in the second direction and a direction opposite to the second direction with respect to the wheel rotation shaft,
when the detector wheel moves in the second direction with respect to the wheel rotation shaft and is positioned at a large-diameter portion of the wheel rotation shaft, rotation of the detector wheel is restricted by a frictional force between an inner circumferential surface of the detector wheel and an outer circumferential surface of the wheel rotation shaft, and
when the detector wheel moves in the direction opposite to the second direction with respect to the wheel rotation shaft and is positioned at a small-diameter portion of the wheel rotation shaft, the detector wheel is rotatable.

4. The radiation detector of claim 3, wherein the detector wheel includes:
a first wheel;
a second wheel that is positioned in the second direction with respect to the first wheel, is parallel to the first wheel, and has the same diameter as the first wheel, and
a plurality of shafts that couple one side of the first wheel and the other side of the second wheel and extend in a direction parallel to the wheel rotation shaft.

5. The radiation detector of claim 4, comprising a connection band surrounding the subject together with the bending support unit and fixing the radiation detector to the subject,
wherein the connection band includes:
a plurality of fixing hooks hooked to the shafts included in different detector wheel assemblies, and
a fixing band formed of an elastic material and coupling the plurality of fixing hooks.

6. The radiation detector of claim 2, wherein the detector wheel includes:
a rotation hole used for rotation of the detector wheel around the wheel rotation shaft;
a fixing hole used for fixing the detector wheel to the wheel rotation shaft; and
a connection hole that is a passage through which the wheel rotation shaft is movable between the rotation hole and the fixing hole, and has a width smaller than a diameter of each of the rotation hole and the fixing hole.

7. The radiation detector of claim 6, wherein the wheel rotation shaft has a shape that increases in diameter toward the second direction,
an inner circumferential surface of the detector wheel corresponding to the rotation hole is formed of a material for reducing friction with the wheel rotation shaft,
an inner circumferential surface of the detector wheel corresponding to the fixing hole is formed of a material for increasing the friction with the wheel rotation shaft,
when the detector wheel moves in the second direction with respect to the wheel rotation shaft and is positioned at a large-diameter portion of the wheel rotation shaft, the wheel rotation shaft is not allowed to pass through the connection hole of the detector wheel,
when the detector wheel moves in the direction opposite to the second direction with respect to the wheel rotation shaft and is positioned at a small-diameter portion of the wheel rotation shaft, the wheel rotation shaft is allowed to pass through the connection hole of the detector wheel,
a center of the rotation hole is positioned at a center of the detector wheel, and
the fixing hole is eccentrically positioned with respect to the detector wheel.

8. The radiation detector of claim 2, wherein each of the detector wheel assemblies includes:
an accommodation part that is disposed on a surface of the bending support unit in the third direction and protrudes by 5 mm or less in the third direction from the surface of the bending support unit in the third direction, wherein the accommodation parts of the detector wheel assemblies are arranged side by side in the first direction; and
a spherical bearing ball inserted into the accommodation part to allow the radiation detector to move along the outer circumferential surface of the subject.
